(19) Europäisches Patentamt

European Patent Office

Office européen des brevets

(11) EP 1 575 040 A2

(12) **EUROPEAN PATENT APPLICATION**

(43) Date of publication:
14.09.2005 Bulletin 2005/37

(51) Int Cl.⁷: **G11B 7/135**

(21) Application number: 05251455.1

(22) Date of filing: 10.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 10.03.2004 JP 2004066698
26.03.2004 JP 2004092708

(71) Applicant: **Ricoh Company, Ltd.**
**Tokyo 143-8555 (JP)**

(72) Inventors:
• **Kitabayashi, Junichi**
**Kawasaki-shi Kanagawa (JP)**
• **Ogata, Tetsuya**
**Yokohama-shi Kanagawa (JP)**

(74) Representative: **Mounteney, Simon James**
**Marks & Clerk**
**90 Long Acre**
**London WC2E 9RA (GB)**

(54) **Optical pickup apparatus and an optical disc drive apparatus equipped with such an optical pickup**

(57)    An optical pickup apparatus couples light beams, and corrects a chromatic aberration and a spherical aberration. A coupling lens (3) includes a plurality of groups of lenses (31, 32) common to light sources (11L, 12L) so as to converge a light beam from each of the light sources. An aperture (41) changes an aperture diameter for the light beam, which has been converged by the coupling lens, in accordance with one of the light sources from which the light beam is emitted. An objective lens (42) converges the light beam onto a recording surface of one of the optical information recording media corresponding to the one of the light sources that emits the light beam. A lens moving mechanism (33) moves at least one group of lenses from among the groups of lenses of the coupling lens in a direction of an optical axis thereof in accordance with an aperture diameter of the aperture.

FIG.5A

EP 1 575 040 A2

FIG.5B

**EP 1 575 040 A2**

**Description**

BACKGROUND OF THE INVENTION

1. Field of the Invention

The present invention generally relates to optical disc drive apparatuses and, more particularly, to an optical pickup apparatus for recording or reproducing information on or from an optical information recording medium by converging a light beam on a recording surface of the optical information recording medium and an optical disc drive apparatus equipped with such an optical pickup apparatus.

2. Description of the Related Art

In recent years, a demand for high-recording density and a large capacity optical disc has been increasing. In order to increase a recording density, it is effective to increase a numerical aperture (NA) of an objective lens and reduce a wavelength of a light to be used so as to reduce a sot diameter of the light converged by the objective lens.

Moreover, with an increase in the recording capacity, there is a strong demand for improvement in the recording or reproducing speed, and acquisition of a high output of a light source and also a high efficiency of the optical system has become a important issue. Further, in an optical disc system of a new standard, it is desired to achieve compatibility with the conventionally marketed CD and DVD.

For example, for CD, a numerical aperture (NA) of an objective lens is 0.45 and a wavelength of is 780 nm, whereas, for DVD, a numerical aperture (NA) of an objective lens is 0.65 and a wavelength is 660 nm so that DVD has a higher recording density and a larger recording capacity than CD. In recent years, an optical disc system, which is referred to as a Blue-ray disc, having a numerical aperture (NA) of an objective lens of 0.85 and a wavelength of 405 nm and an optical disc system, which is referred to as AOD, having a numerical aperture (NA) of an objective lens of 0.65 and a wavelength of 405 nm have been developed. For an optical pickup apparatus having a plurality of light sources, a technique to share optical components such as an objective lens and a coupling lens has been developed so as to simplify a structure of an optical system.

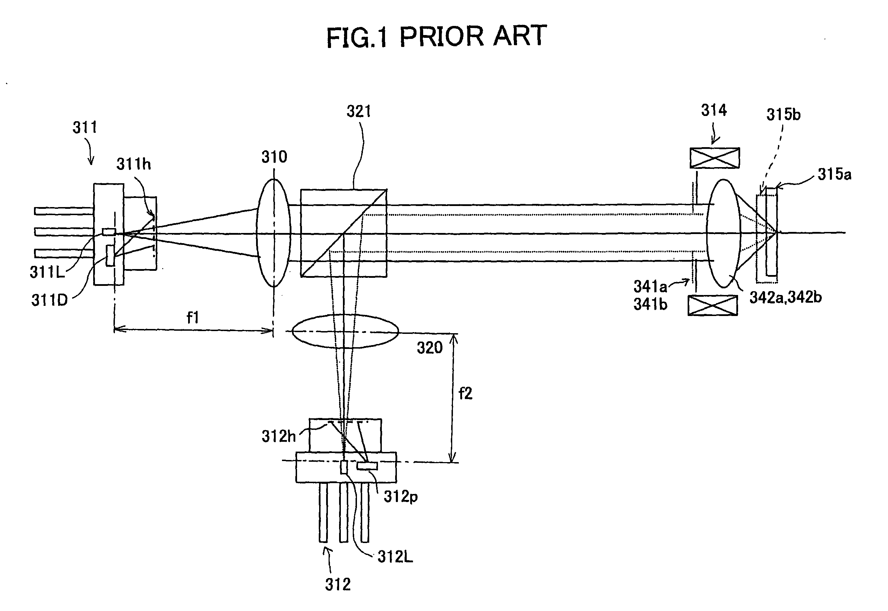

Shown in FIG. 1 is an outline of an optical system of an optical pickup apparatus of a conventional CD/DVD. The optical system of the optical pickup apparatus comprises a DVD hologram unit 311, a coupling lens 310, a beam splitter 321 and objective lenses 142a and 142b that are arranged along a main line in that order. On the other hand, a CD hologram unit 312, a coupling lens 320 and a beam splitter 121 are arranged along a line perpendicular to the main line in that order toward the beam spritter121. The optical system also comprises an actuator 314 that drives objective lenses 342a and 342b.

The DVD hologram unit 311 integrally incorporates a light source 311L, a hologram 311h for separating a signal light from a light reflected by a disc and a light-receiving element 311p for detecting a signal. Similarly, the CD hologram unit 312 integrally incorporates a light source 312L, a hologram 312h and a light-receiving element 312p.

The objective lenses 342a and 342b differ from CD to DVD. On the sides of the light sources 311L and 312L of the objective lenses 342a and 342b, an aperture 341a for DVD and an aperture 314b for CD are arranged with respect to the objective lenses 342a and 342b, respectively. The apertures 341a and 341b are shared by using an opening of an objective lens holder.

It should be noted that the objective lenses 342a and 342b and the apertures 341a and 341b are integrally driven by the lens actuator 314 in a focusing direction and a tracking direction. It should be noted that a DVD disc 315a is indicated by solid lines and a CD disc 315b is indicated by dotted lines. Moreover, the coupling lenses 310 and 320 are different in their aperture and a light taking angle of the light beam, and, thus, lenses having different focal distances are used for each light sources 311L and 312L.

If a focal distance of the coupling lens 310 is set to f1, and a focal distance of the coupling lens 320 is se to f2, an optical path length of equal to or longer than f1 or f2, must be provided before incident on the beam splitter 321, which causes a problem that the optical system is increased in its size. Moreover, if the coupling lenses 310 and 320 are made common, a coupling efficiency of one of the light sources is decreased, which causes a problem in that a spot power on the discs 315a and 315b is decreased.

This is because a spot diameter is influenced by an optical amount ratio (RIM) at a periphery of the aperture with respect to the center of the optical axis, other than the above-mentioned wavelength and numerical aperture. Although the spot diameter decreases as the RIM increases, a coupling efficiency of effectively converging the light beam from the light source on a surface of the disc is decreased, which causes a problem in that a power is not sufficient and a recording and reproducing speed is decreased. It should be noted that in a normal optical disc system, for example, a design target value of the RIM is determined as follows.

| minimum RIM | |
|---|---|
| CD | 15% |
| DVD | 30% |
| Blu-ray/AOD | 50% |

If a coupling lens is shared by DVD and AOD having the same NA, and if a focal distance of the coupling lens is set to 50% of RIM of AOD, the focal distance on the DVD side is also 50%, which decreases the coupling efficiency of DVD.

Moreover, if a focal distance of the coupling lens is set to 30% of DVD, the focal distance on the AOD side is also about 30%, which increases the spot diameter. Further, a combination of different numerical apertures causes a problem that the above-mentioned problems become severer.

The following patent document 1 discloses an optical disc drive apparatus which solves the above-mentioned problem by providing a condensing lens on one of the sides of the two light sources. The optical disc drive apparatus of the patent document 1 has a converging optical system between a dichroic prism and a second light source having a condensing lens on one of the sides of two light sources, the converging optical system converting a spreading angle of a diverging light beam into a smaller spreading angle and leading the light beam to the dichroic prism.

Moreover, as a conventional technique to correct a chromatic aberration or a spherical aberration, the following patent document 2 discloses an example to drive a group of coupling lenses. Specifically, by configuring and arranging one of two lens elements movable along an optical axis by driving a group of coupling lenses, a fluctuation of spherical aberration generated on each optical surface in the converging optical system, especially, the optical surface of an objective lens can be corrected.

Since the technique disclosed in the patent document 2 can correct in realtime a spherical aberration generated in an objective lens due t a variation in a thickness of a transparent substrate of an optical information recording medium, a small fluctuation in an oscillation wavelength of a laser light source or a change in temperature and humidity, an appropriate spot can be formed on an information recording surface of the optical information recording medium.

As for the objective lens, a multi-wavelength compatible lens having a diffraction grating on a lens surface has been put into practice, and a tree-wavelength compatible diffraction lens handling the Blue-ray or AOD has been developed. However, with respect to the coupling lens, in order to optimize the coupling efficiency of each light source, it is necessary to use lenses having different distance for each light source since the numerical aperture and the light taking angle of the light beam differ for each light source, and, thereby, it is difficult to make the coupling lens common to a plurality of light sources.

Thus, the following patent document 3 discloses an optical pickup apparatus solving the above-mentioned problem, which comprises: at least two laser light sources of a first laser light source oscillating at a wavelength in a range of 620 nm to 680 and having an auxiliary lens between an optical synthesis component and a light source to converge and diverge a light beam and a second laser light source oscillating at a wavelength in a range of 750 nm to 810 nm; a collimator lens provided for converting the light beams projected from the first and second laser light sources into substantially parallel light beams; and an optical component provided in an optical path between the first and second laser light sources and the collimator lens so as to synthesize optical paths of the light beams projected from the first and second laser light sources, wherein a first auxiliary lens diverging the light beam is located in an optical path between the optical synthesis component and the first laser light source, and a second auxiliary lens converging the light beam is located in an optical path between the optical synthesis component and the second laser light source.

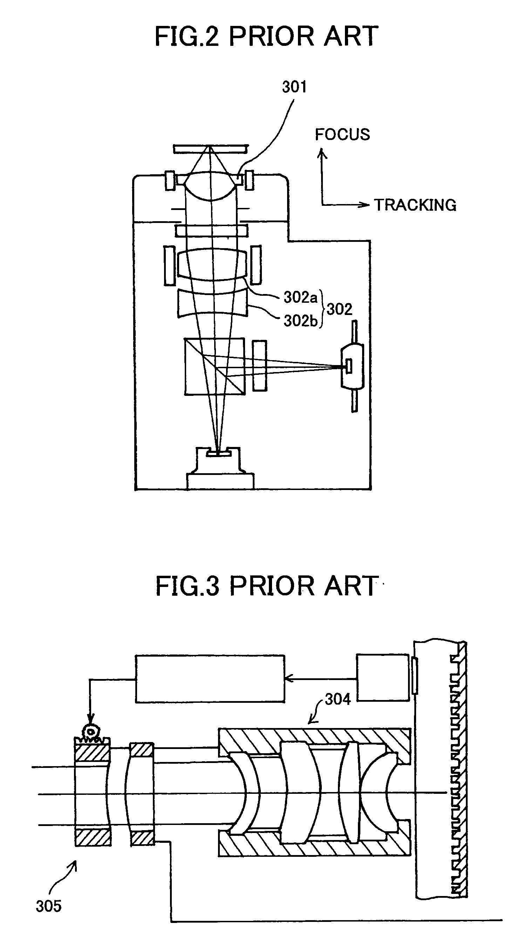

Moreover the patent document 2 discloses an optical pickup apparatus that is capable of correcting a fluctuation of a spherical aberration generated on each optical surface in a light converging system, especially, on the optical surface of a lens 301, as shown in FIG. 2, by causing at least one of lenses 302a and 302b constituting a coupling lens 302 movable along a direction of the optical axis. Since the technique disclosed in the patent document 2 can correct in realtime a spherical aberration generated in an objective lens due t a variation in a thickness of a transparent substrate of an optical information recording medium, a small fluctuation in an oscillation wavelength of a laser light source or a change in temperature and humidity, an appropriate spot can be formed on an information recording surface of the optical information recording medium.

Moreover, when performing recording or reproduction on a multi-layer optical disc, a spherical aberration is generated due to variation in the thickness of layers, which causes a signal degradation due to enlargement of a converged light spot. For this reason, in an optical pickup performing recording or reproduction on a multi-layer optical disc, means for correcting the spherical aberration generated due to a variation in the substrate thickness is provided. For example, as a correction by a beam expander, the following patent document 4 discloses a technique to correct the spherical aberration due to a variation in a substrate thickness by changing an interval of the lenses of a beam example located between an objective lens 304 and a coupling lens 305 along an optical axis of the beam expander as shown in FIG 3.

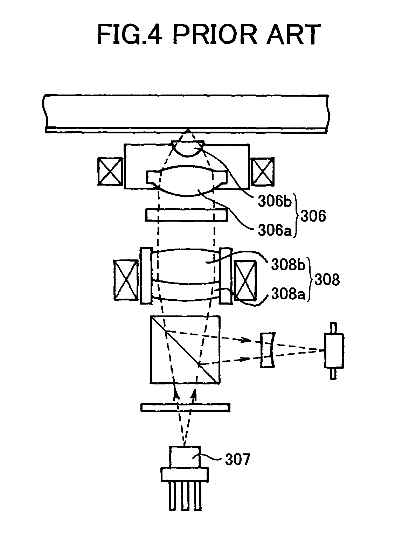

Moreover, as a correction by movement of a coupling lens, the following patent document 5 discloses a technique to correct the spherical aberration due to a variation in a substrate thickness by moving a coupling lens 308 located between an objective lens 306 and a light source 7 as shown in FIG. 4.

Patent document 1: Japanese Laid-Open Patent Application No. 2001-126298
Patent document 2: Japanese Laid-Open Patent Application No. 2002-197712
Patent document 3: Japanese Laid-Open Patent Application No. 2002-237086
Patent document 4: Japanese Laid-Open Patent Application No. 05-266511
Patent document 5: Japanese Laid-Open Patent Application No. 11-259893

The technique disclosed in the above-mentioned patent document 1 is not applicable to a structure in which two light sources are located close to each other and mounted in one package. Additionally, there is a problem in that a chromatic aberration and a spherical aberration generated by a fluctuation in the wavelength of the light source and a variation in a substrate thickness of a multi-layer disc and a disc cannot be corrected.

Additionally, the technique disclosed in the above-mentioned patent document 2 has a problem in that only one light source is used and it is difficult to provide a plurality of optical information recording media.

Moreover, in the above-mentioned patent document 2, there is a problem in that it is difficult to handle a plurality of optical information recording media since there is provided only one light source.

In the above-mentioned patent document 3, the above-mentioned problem is solved by providing a converging lens and a diverging lens to each of the two light sources. Although the number of lenses is increased as compared to a conventional example in which a coupling lens is provided to each light source, the optical pickup apparatus can be reduced in its size since the converging lens and the diverging lens are located in a diverging optical path of each light source. However, there still is a problem in that a correction of a chromatic aberration and a spherical aberration due to a variation in a substrate thickness of a disc, a multi-layer disc or a fluctuation in a wavelength cannot be achieved, which correction is needed with reduction in the wavelength and increase in numerical aperture.

As usual means for correcting these aberrations, there is considered a method in which a two-group structure expander lens is inserted between a coupling lens and an objective lens. However, such a method may increase a number of component parts, which increases the size of the entire apparatus. Additionally, there is a problem in that a spot power on a disc surface is decreased due to a decrease in a transmittance of a light beam, which may cause difficulty in achieving high-speed recording.

In the above-mentioned patent document 4, a spherical aberration can be corrected by changing a magnification of a light beam incident on an objective lens. However, there is a problem, in this structure, that the optical pickup of this structure is not suitable for an optical disc drive, which requires miniaturization, since a number of lenses located in the optical system is large.

In the above-mentioned patent document 5, there is a problem in that it is difficult to achieve a correction of a spherical aberration since the magnification change of the coupling lens is large and a drive amount (distance of movement) must be very small.

## SUMMARY OF THE INVENTION

It is a general object of the present invention to provide an improved and useful optical pickup apparatus in which the above-mentioned problems are eliminated.

A more specific object of the present invention is to provide an optical pickup apparatus having a plurality of light sources, which can couple the light beams from the light sources efficiently with a simple structure, and is capable of correcting a chromatic aberration and a spherical aberration generated by a fluctuation in wavelength of the light sources or a variation in a thickness of a substrate of an optical disc.

In order to achieve the above-mentioned objects, there is provided according to the present invention an optical pickup apparatus for recording/reproducing information on/from an optical information recording medium by converging a light beam from a light source onto a recording surface of the optical information recording medium, the optical pickup apparatus comprising: a plurality of light sources corresponding to a plurality of optical information recording media, respectively; a coupling lens including a plurality of groups of lenses common to the plurality of light sources so as to converge a light beam from each of the light sources; an aperture capable of changing an aperture diameter for the light beam, which has been converged by the coupling lens, in accordance with one of the light sources from which the light beam is emitted; an objective lens converging the light beam, which has passed through the aperture, onto a recording surface of one of the optical information recording media corresponding to the one of the light sources that emits the light beam; and a lens moving mechanism moving at least one group of lenses from among the plurality of groups of lenses of the coupling lens in a direction of an optical axis thereof so that a ratio of an intensity of the light beam in a peripheral part of the aperture of the light beam to an intensity of the light beam at the center of the optical axis is set to a predetermined value for each light source.

Accordingly, it becomes possible to determine a travel distance of the coupling lens based on the aperture diameter and an optimum taking angle of the light beams from the light sources, which enables obtaining an optimum spot diameter for each light source and a highest coupling efficiency. Thus, it is possible to provide a high-speed and high-performance multi-wavelength optical pickup apparatus having a simple structure.

In the optical pickup apparatus according to the present invention, the objective lens may be common to the plurality of light sources. Accordingly, even if the coupling lens and the objective lens are common to the light sources, an optimum coupling efficiency can be set for each light source and the optical system can be miniaturized.

In the optical pickup apparatus according to the present invention, at least two of the plurality of light sources may be located with an light-emitting pint interval therebetween being equal to or smaller than several hundreds micrometers, and at least two groups of lenses of the coupling lens may be provided with the lens moving mechanisms that moves the at least two groups of lenses, respectively, in the direction of the optical axis in accordance with the aperture diameter corresponding to each of the at least two of the plurality of light sources. Accordingly, an optimum coupling efficiency can be set for each light source and the optical system can be miniaturized in this invention, unlike a conventional optical system in which two light sources are incorporated into one package but a decrease in a coupling efficiency of one of the light sources is not avoidable.

In the optical pickup apparatus according to the present invention, at least two of the plurality of light sources have different wavelengths, and after the lens moving mechanism moves at least one group of lenses from among the plurality of groups of lenses in the direction of the optical axis in accordance with the aperture diameter of the aperture, the lens moving mechanism further moves the at least one group of lenses from among the plurality of groups of lenses in the direction of the optical axis in accordance with the wavelengths of the at least two of the plurality of light sources.

Accordingly, while providing an optimum coupling efficiency is provided to each light source by moving the coupling lens, a chromatic aberration can be corrected and a best beam spot can be obtained. Thus, it is possible to provide a high-speed and high-performance multi-wavelength optical pickup apparatus having a simple structure.

In the optical pickup apparatus according to the present invention, at least one of the plurality of optical information recording media may have a plurality of recording surfaces in a layered structure, and after the lens moving mechanism moves at least one group of lenses from among the plurality of groups of lenses in the direction of the optical axis in accordance with the aperture diameter of the aperture, the lens moving mechanism may move the at least one group of lenses from among the plurality of groups of lenses in the direction of the optical axis in accordance with the plurality of recording surfaces. Accordingly, a spherical aberration generated in a multi-layer disc can be corrected, and an optimum beam spot can be obtained. Thus, it is possible to provide a high-speed and high-performance multi-wavelength optical pickup apparatus having a simple structure.

In the optical pickup apparatus according to the present invention, at least one of the plurality of optical information recording media may have has a light-transmitting layer, and after the lens moving mechanism moves at least one group of lenses from among the plurality of groups of lenses in the direction of the optical axis in accordance with the aperture diameter of the aperture, the lens moving mechanism may further move the at least one group of lenses from among the plurality of groups of lenses in the direction of the optical axis in accordance with a variation in thickness of the light-transmitting layer. Accordingly, it becomes possible to correct a spherical aberration even in an optical disc having a light-transmitting layer whose thickness has variation, which enables an optimum beam spot being obtained. Thus, it is possible to provide a high-speed and high-performance multi-wavelength optical pickup apparatus having a simple structure.

In the optical pickup apparatus according to the present invention, after the lens moving mechanism moves at least one group of lenses from among the plurality of groups of lenses in the direction of the optical axis in accordance with the aperture diameter of the aperture, the lens moving mechanism further moves the at least one group of lenses from among the plurality of groups of lenses in the direction of the optical axis in accordance with a fluctuation in wavelength of one of the plurality of light sources that emits the light beam. Accordingly, it becomes possible to correct a chromatic aberration even in a case where a wavelength of each light source fluctuates due to a temperature change, which enables an optimum beam spot being obtained. Thus, it is possible to provide a high-speed and high-performance multi-wavelength optical pickup apparatus having a simple structure.

The optical pickup apparatus according to the present may further comprise spherical aberration detecting means for detecting a spherical aberration with respect to at least one of the plurality of light sources. Accordingly, it becomes possible to comprehensively correct a chromatic aberration generated due to a variation in a wavelength of the light source or a wavelength fluctuation due to a temperature change and also a spherical aberration generated due to a multi-layer structure of an optical disc or a variation in thickness of a light-transmitting layer, which enables an optimum beam spot being obtained. Thus, it is possible to provide a high-speed and high-performance multi-wavelength optical pickup apparatus having a simple structure.

In the optical pickup apparatus according to the present invention, the coupling lens may be an achromatic lens that corrects a chromatic aberration in a beam spot formed on the recording surface by converging the light beam emitted from at least one of the light sources. Accordingly, it becomes possible to correct a chromatic aberration generated due to instantaneous wavelength fluctuation caused by a change in an output power of each light source, which enables an optimum beam spot being obtained. Thus, it is possible to provide a high-speed and high-performance multi-wavelength optical pickup apparatus having a simple structure.

The optical pickup apparatus according to the present invention may further comprise a lens located between one of the light sources and the coupling lens so as to change a degree of divergence of the light beam from the one of the light sources. Accordingly, by providing the additional lens, an amount of movement of the coupling lens can be reduced, which enables the optical system being miniaturized.

Additionally, there is provided according to another aspect of the present invention an optical disc drive apparatus comprising: a drive mechanism that drives an optical information recording medium; and one of the optical pickup apparatus mentioned above.

Additionally, there is provided according to another aspect of the present invention an optical pickup apparatus for recording/reproducing information on/from an optical information recording medium by converging a light beam from a light source onto a recording surface of the optical information recording medium, the optical pickup apparatus comprising: a plurality of light sources corresponding to a plurality of optical information recording media, respectively; an optical path synthesizing and separating component that synthesizes and separates light beams from the plurality of light sources; a coupling lens including a plurality of groups of lenses common to the plurality of light sources so as to converge a light beam from each of the light sources; and an objective lens converging the light beam, which has passed through the aperture, onto a recording surface of one of the optical information recording media corresponding to the one of the light sources that emits the light beam, wherein the plurality of groups of lenses constituting the coupling lens is located in a direction of an optical axis of at least one of the light sources with the optical path synthesizing and separating component interposed therebetween; and a lens moving mechanism moves at least one group of lenses from among the plurality of groups of lenses of the coupling lens in a direction of an optical axis thereof in accordance with an aperture diameter of the aperture.

Accordingly, while realizing an optimum coupling efficiency for each light source, the optical system for coupling can be miniaturized. Additionally, with respect to the light source optical path requiring a spherical aberration and a chromatic aberration, there is no need to add other components to perform such a correction, thereby achieving miniaturization and high-speed recording.

Moreover, since at least one group of lenses from among the plurality of groups of lenses are moved so as to change a magnification of the light beam to be incident on the objective lens, a spherical aberration can be corrected. Furthermore, since lens moving mechanism has a function of a coupling lens, a number of optical components is reduced, which miniaturizes the entire optical system. In addition, since the coupling lens is shared by the plurality of light sources, the number of optical components can be reduced further, which further miniaturizes the entire optical system. Since the optical beam synthesizing means is provided, a space for arranging other optical components can be reserved between the light sources and the coupling lens.

Moreover, it becomes possible to correct a spherical aberration with respect to light beams from a plurality of light sources by moving the coupling lens which the light beams form the plurality of light sources pass through. Furthermore, for example, if a first light beam synthesizing component for a first light source and a second light source is located between at least one group of lenses of the coupling lens and the objective lens, and further at least one group of lenses of the coupling lens for a third light source is located between the third light source and a second light beam synthesizing component, an optical pickup in which such a third light source is integrally incorporated can be provided without increasing the number of optical beam transmitting components of the first and second light sources. Therefore, it is possible to provide an optical pickup apparatus, which is capable of correcting a chromatic aberration and a spherical aberration generated due to a wavelength fluctuation of each light source, a multi-layered structure disc, a variation in a thickness of a disc substrate, while efficiently coupling an optical beam from each light source with a simple structure.

In the optical pickup apparatus according to the above-mentioned invention, the lens moving mechanism may be provided to the lens having a maximum absolute value of a focal distance from among the plurality of groups of lenses. Accordingly, an accuracy of driving lenses when correcting a spherical aberration can be relaxed.

In the optical pickup apparatus according to the above-mentioned invention, one of the optical information recording media may have a plurality of recording surfaces in a layered structure, and the lens moving mechanism may move at least one group of lenses of the coupling lens in the direction of the optical axis so as to converge each light beam onto a respective one of the recording surfaces. Accordingly, a degree of divergence of the light beam to be incident on the objective lens can be changed so as to correct a spherical aberration and a chromatic aberration, by moving at least one group of lenses of the coupling lens in the direction of the optical axis in response to a difference in substrate thickness of each layer, a manufacturing tolerance of substrate thickness, a wavelength fluctuation of each light source. Thus, an excellent beam spot can always be formed, which improves a recording and reproducing characteristic.

In the optical pickup apparatus according to the above-mentioned invention, one of the optical information recording media may have a light-transmitting layer, and the lens moving mechanism may move at least one group of lenses of the coupling lens in the direction of the optical axis in accordance with a variation in thickness of the light-transmitting layer. Accordingly, a degree of divergence of the light beam to be incident on the objective lens can be changed so as to correct a spherical aberration and a chromatic aberration, by moving at least one group of lenses of the coupling lens in the direction of the optical axis in response to a difference in substrate thickness of each layer, a manufacturing tolerance of substrate thickness, a wavelength fluctuation of each light source. Thus, an excellent beam spot can always be formed, which improves a recording and reproducing characteristic. Additionally, by moving the coupling lens based on information of a result of detection of a substrate thickness of an optical disc, a spherical aberration correction can be performed on an optical disc having a multi-layer structure.

In the optical pickup apparatus according to the above-mentioned invention, the lens moving mechanism may move at least one group of lenses of the coupling lens in the direction of the optical axis in accordance with a wavelength fluctuation of each of the light sources. Accordingly, a degree of divergence of the light beam to be incident on the objective lens can be changed so as to correct a spherical aberration and a chromatic aberration, by moving at least one group of lenses of the coupling lens in the direction of the optical axis in response to a difference in substrate thickness of each layer, a manufacturing tolerance of substrate thickness, a wavelength fluctuation of each light source. Thus, an excellent beam spot can always be formed, which improves a recording and reproducing characteristic.

In the optical pickup apparatus according to the above-mentioned invention, each of the coupling lens and the objective lens may be an achromatic lens system. Accordingly, a chromatic aberration can be eliminated even when a wavelength is instantaneously changed such as in a mode hop, thereby reducing errors during recording and reproduction. Additionally, when an anamorphic element such as a beam shaping prism is arranged between the coupling lens and the objective lens, it is required to achromatic function to cause a light incident on the anamorphic lens to be a parallel light. Thus, the above-mentioned structure is needed so as to prevent generation of astigmatism in the anamorphic element.

In the optical pickup apparatus according to the above-mentioned invention, an entire system including the coupling lens and the objective lens may be an achromatic lens system. Accordingly, a chromatic aberration can be corrected even when a refraction lens is used for the objective lens. Thus, an optical system having a good light use efficiency and no chromatic aberration can be realize, and it is possible to achieve high speed and high stabilization. Moreover, it also becomes possible to reduce a chromatic aberration generated due to a short time wavelength fluctuation with respect to the optical system of each light source.

The optical pickup apparatus according to the above-mentioned invention may further comprise an aspheric aberration detecting means for detecting an aspheric aberration in a reflected light from one of the recording surfaces of one of the optical information recording media onto which a light beam from at least one of the light sources is converged. Accordingly, a chromatic aberration can be corrected even when a refraction lens is used for the objective lens. Thus, an optical system having a good light use efficiency and no chromatic aberration can be realize, and it is possible to achieve high speed and high stabilization. Moreover, it also becomes possible to reduce a chromatic aberration generated due to a short time wavelength fluctuation with respect to the optical system of each light source. Accordingly, since the direction of movement and the amount of movement of the coupling lens can be recognized instantaneously by the spherical aberration detection signal, there is no need to seek for an optimum position. Thus, a spherical aberration and a chromatic aberration can always be corrected for any cause, thereby enabling a high speed and excellent recording and reproduction.

In the optical pickup apparatus according to the above-mentioned invention, one group of lenses located closest to the light sources may serve as a concave lens. Accordingly, since a rim light intensity (RIM) of a light beam incident on the objective lens can be increased by making a lens closer to a light source than the optical path synthesizing and separating mechanism as a concave lens so as to increase a diverging angle of a diverging light from the light source concerned, a beam spot diameter on a disc is decreased, which results an improvement in the recording and reproducing performance. Moreover, by combining with a convex lens closer to the objective lens than the optical path synthesizing and separating mechanism, an achromatic design can be made even if it is a single lens.

In the above-mentioned optical pickup apparatus, λA<λB may be satisfied where λA is a wavelength of a light beam that transmits the concave lens, and λB is a wavelength of a light beam that does not transmit the concave lens. Accordingly, if the light source on the side of the concave lens is set to one having a shorter wavelength than the other light source, an effect of increasing the RIM becomes more remarkable due to a divergence action of the concave lens.

In the optical pickup apparatus according to the above-mentioned invention, one group of lenses located closest to the light sources may serve as a convex lens. Accordingly, by making the group of lenses of the coupling lens on the side of the objective lens as a convex lens, an optical path for coupling can be reduced, which miniaturizes the optical pickup apparatus. Additionally, since a light beam of the light source closest to the convex lens is coupled up to a smaller RIM, the coupling efficiency and a power on the disc surface are increased, which realizes high-speed recording.

In the above-mentioned optical pickup apparatus, $\lambda_B < \lambda_A$ may be satisfied where $\lambda_A$ is a wavelength of a light beam that transmits the convex lens, and $\lambda B$ is a wavelength of a light beam that does not transmit the convex lens. Accordingly, if the light source on the side of the convex lens is set to one having a longer wavelength than the other light source, the above-mentioned effect can be more remarkable due to a convergence action of the convex lens.

In the optical pickup apparatus according to the present invention, the at least one group of lenses moved by the lens moving mechanism in the direction of the optical axis may be located between the light sources and the optical path synthesizing and separating component. Accordingly, since a degree of divergence can be changed only for a light beam of a light source that require an adjustment, other light sources can always be fixed in positions, which provides a stable performance.

In the optical pickup apparatus according to the present invention, the at least one group of lenses moved by the lens moving mechanism in the direction of the optical axis may be located between the optical path synthesizing and separating component and the objective lens. Accordingly, if there are a plurality of light sources that emit light beams requiring an adjustment, the lens moving mechanism can be shared with the plurality of light sources, which enables miniaturization of the optical pickup apparatus.

The optical pickup apparatus according to the present invention may further comprise beam shaping means provided between the light sources and one group of lenses arranged closest to the light sources. Accordingly, by arranging the beam shaping means utilizing the space between the coupling lens and the light source, a circular light beam of a semiconductor laser can be achieved, which increases a light use efficiency (a coupling efficiency).

The optical pickup apparatus according to the present invention may further comprise discriminating means for discriminating a kind of each of the optical information recording media, and the lens moving mechanism may move at least one group of lenses that constitute the coupling lens in the direction of the optical axis in accordance with the king of each of the optical information recording media. Accordingly, by discriminating a kind of an optical disc through the discriminating means and moving the coupling lens based on information regarding the discrimination, a spherical aberration correction can be performed with respect to optical discs having various substrate thicknesses.

In the optical pickup apparatus according to the present invention, a direction of the optical axis of the coupling lens or the objective lens may be set so that a spherical aberration generated in each optical surface is minimized in accordance with an oscillation wavelength of each of the light sources. Accordingly, a wavefront aberration in an optical system can be optimized by adjusting the positions of the group of lenses in the direction of the optical axis in accordance with a variation in oscillation wavelength of a light source. Additionally, for example, a wavefront aberration in the optical system of each light source can be optimized by changing positions of at least one group of lenses constituting the coupling lens between when a first light source is selected and when a second light source is selected.

Additionally, there is provided according to another aspect of the present invention an optical disc drive apparatus comprising: a drive mechanism for driving an optical information recording medium; and an optical pickup apparatus according to the above mentioned invention that performs recording and reproducing operations on the optical information recording medium driven by the drive mechanism. Accordingly, an optical disc drive apparatus can be provided that can provide one of the above-mentioned effects. Additionally, an optical disc drive apparatus can be realized that can efficiently couple light beams from a plurality of light beams with a simple structure, and that can correct a chromatic aberration and a spherical aberration generated due to a variation in thickness of a disc substrate, a multi-layer structure of a disc and a wavelength fluctuation of a light surface. Further, a miniaturized optical disc drive apparatus can be provided.

Other objects features and advantages of the present invention will become more apparent from the following detailed description when read in conjunction with the accompanying drawings.

BRIEF DESCRIPTION OF THE DRAWINGS

FIG. 1 is an illustration of an optical system of a conventional optical pickup apparatus;
FIG. 2 is an illustration of an optical system of another conventional optical pickup apparatus;
FIG. 3 is an illustration of an optical system of a further conventional optical pickup apparatus;
FIG. 4 is an illustration of an optical system of yet another conventional optical pickup apparatus;
FIGS. 5A and 5B are illustrations of an optical system of an optical pickup apparatus according to a first embodiment of the present invention;
FIGS. 6A and 6B are illustrations for explaining a focal distance of a coupling lens system shown in FIGS. 5A and 5B;
FIGS. 7A and 7B are illustrations of an actual design of the coupling lens system shown in FIGS. 5A and 5B;
FIG. 8A is a plan view of an actuator shown in FIGS. 5A and 5B;

FIG. 8B is a cross-sectional view of the actuator shown in FIG. 8A;

FIGS. 9A and 9B are illustrations of a variation of the optical system of the optical pickup apparatus shown in FIGS. 5A and 5B;

FIG. 10 is an illustration of another variation of the optical system of the optical pickup apparatus shown in FIGS. 5A and 5B;

FIG. 11 is an illustration of another variation of the optical system of the optical pickup apparatus shown in FIGS. 5A and 5B;

FIG. 12 is an illustration of a further variation of the optical system of the optical pickup apparatus shown in FIGS. 5A and 5B;

FIG. 13 is an illustration of yet another variation of the optical system of the optical pickup apparatus shown in FIGS. 5A and 5B;

FIG. 14 is an illustration of a basic structure of an optical system of an optical pickup apparatus according to the present invention;

FIG. 15 is an illustration of an optical system of an optical pickup apparatus according to a second embodiment of the present invention;

FIGS. 16A and 16B are illustrations for explaining focal distances of a coupling lens system shown in FIG. 15;

FIG. 17 is a graph showing a wavefront aberration reducing effect when a spherical aberration is corrected based on the structure shown in FIG. 15;

FIG. 18 is an illustration of a variation of the optical system of the optical pickup apparatus shown in FIG. 15;

FIG. 19 is an illustration of another variation of the optical system of the optical pickup apparatus shown in FIG. 15;

FIG. 20 is an illustration of a further variation of the optical system of the optical pickup apparatus shown in FIG. 15;

FIG. 21 is an illustration of yet another variation of the optical system of the optical pickup apparatus shown in FIG. 15;

FIG. 22 is a block diagram of optical disc discriminating means provided in the optical pickup apparatus; and

FIG. 23 is a block diagram of an optical disc drive apparatus provided with the optical pickup apparatus according to the present invention.


DETAILED DESCRIPTION OF THE PREFERRED EMBODIMENTS

(First Embodiment)

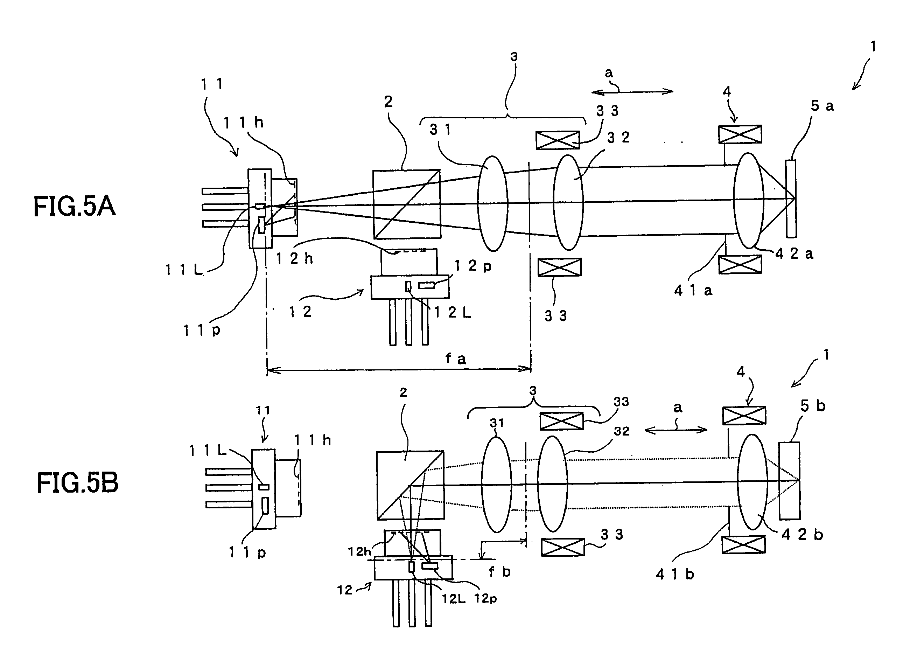

A description will be given of an optical pickup apparatus according to a first embodiment of the present invention. FIGS. 5A and 5B show an optical system provided in the optical pickup apparatus according to the present invention.

The optical system 1 shown in FIGS. 5A and 5B comprises a first hologram unit 11, a beam splitter 2, a coupling lens system 3 and an actuator 4 that are arranged on a straight line in that order. The optical system 1 also comprises a second hologram unit 12, which faces the beam splitter 2 and has an optical axis perpendicular to the straight line. It should be noted that the first coupling lens system 3 includes a first coupling lens (a group of lenses) 31, a second coupling lens (a group of lenses) 32, a single-axis actuator 33 for driving the second coupling lens 32 in a direction of the optical axis, etc. The actuator 4 is provided with apertures (opening parts) 41a and 41b, objective lenses 42a and 42b, a holder 43, etc., so as to drive the objective lenses 42a and 42b.

It should be noted that the first hologram unit 11 is provided with a laser light source 11L, a hologram element 11h for acquiring a necessary signal by diffracting a light reflected by a disc, and a light-receiving element 11p for generating various signals. Similarly, the second hologram unit 12 is provided with a laser light source 12L, a hologram element 12h for acquiring a necessary signal by diffracting a light reflected by a disc, and a light-receiving element 12p for generating various signals.

FIG. 5A is an illustration showing a state where the first hologram unit 11 emits a light. In FIG. 5A, the diverging light from the first hologram unit 11 transmits the beam splitter 2 and transmits the first coupling lens 31, and, then, transmits the coupling lens 32. When the focal distance of the coupling lens system is fa and the light-emitting point (the laser light source 11L) is at a focal point, the transmitted light becomes a parallel light, and the parallel light is limited in its aperture diameter and is converged onto a recording surface of a DVD (optical information recording medium) 5a by the objective lens 42a. The light reflected by the DVD 5a passes through the objective lens 42a, the second coupling lens 32, the first coupling lens 31 and the beam splitter 2, and, then, the light is incident on the hologram unit 11 again. The light-receiving unit 11p of the hologram unit 11 generates a track signal, a focus signal, an information signal, etc., by the light incident on the hologram unit 11.

It should be noted that the objective lens 42a is servo-controlled by the two-axis actuator 4 in accordance with the track signal and the focus signal so as to form a light spot of a diffraction limit on the DVD 5a by always following a movement of the disc.

FIG. 5B is an illustration showing a state where the first hologram unit 12 emits a light. In FIG. 5B, the diverging light from the second hologram unit 12 transmits the beam splitter 2 and transmits the first coupling lens, and, then, transmits the second coupling lens 32. When the focal distance of the coupling lens system is fb and the light-emitting point (the laser light source 12L) is at a focal point, the transmitted light becomes a parallel light, and the parallel light is limited in its aperture diameter and is converged onto a recording surface of a CD (optical information recording medium) 5b by the objective lens 42b. The light reflected by the CD 5b passes through the objective lens 42b, the second coupling lens 32, the first coupling lens 31 and the beam splitter 2, and, then,'the light is incident on the hologram unit 12 again. The light-receiving unit 12p of the hologram unit 12 generates a track signal, a focus signal, an information signal, etc., by the light incident on the hologram unit 12.

It should be noted that the objective lens 42b is servo-controlled by the two-axis actuator 4 in accordance with the track signal and the focus signal so as to form a light spot of a diffraction limit on the CD 5b by always following a movement of the disc.

Here, since the second coupling lens 32 is moves in the direction "a" of the optical axis the focal distance fb of the coupling lens system 3 (the first coupling lens 31, the second coupling lens 32) can be changed from the focal distance fa of FIG. 5A. That is, generally, the synthetic focal distance f in two thin lens system is given by the following equation.

$$1/f = 1/f1 + 1/f2 - d/(f1 \times f2) \tag{1}$$

f1: focal distance of a first coupling lens
f2: focal distance of a second coupling lens
d: an interval between the first coupling lens and the second coupling lens

Therefore, f is changeable by varying d.

When the light-emitting point (laser light source 12L) of the second hologram unit 12 is located at the focal distance fb of the coupling lens system 3, a light transmitting the coupling lens system 3 and traveling to the aperture 41b is a parallel light. Then, the light is limited in its aperture diameter, and is converged onto the recording surface of the CD 5b by the objective lens 42b. When the light taking angle for each of the two leaser light sources 11L and 12L, which satisfies the aperture diameter and the RIM specifications of the objective lenses 42a and 42b, is determined, the focal distance f of the coupling lens system 3 is given by the following equation.

$$f = \phi/(2 \times \sin\theta) \tag{2}$$

Accordingly, an optimum synthetic focal distance f is acquired from an optimum value of θ with respect to each of the laser light sources 11A and 12L using the equations (1) and (2), and a value of the distance d between the first coupling lens and the second coupling lens is acquired in accordance with the synthetic focal distance. Finally, a value of the distance of the second coupling lens 32 to be moved can be acquired.

When the light beam from the coupling lens system 3 is non-parallel light, the distance d between the first coupling lens and the second coupling lens can be acquired using the same equations.

The following Table 1 shows an example of specific design in the cases of AOD and DVD.

Table 1

|  | AOD | DVD |  |
|---|---|---|---|
| DIVERGING ANGLE OF LIGHT SOURCE (HALF VALUE) | 10° | 10° | $\theta_{//}$ DIRECTION FOR SEMICONDUCTOR LASER |
| MINIMUM VALUE OF RIM | 50% | 30% |  |
| FOCAL DISTANCE (f) of OBJECTIVE LENS | 3mm | 3mm |  |
| NUMERICAL APERTURE | 0.65 | 0.65 |  |
| APERTURE DIAMETER | 3.9 | 3.9 | $\phi = 2 \times f \times NA$ |

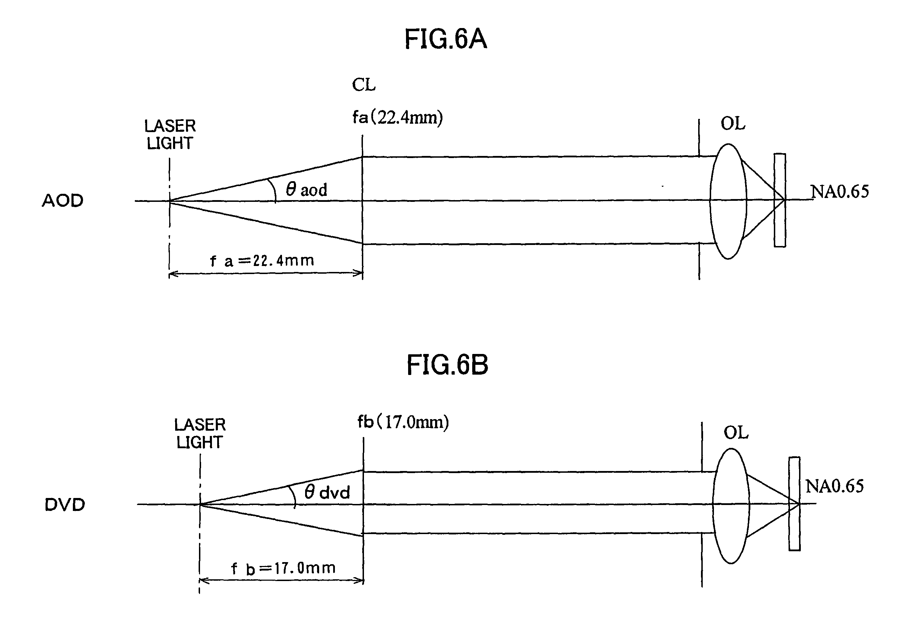

According to the Table 1 and FIG. 6A, it is appreciated that the light taking angle θaod of the light from the laser light source for AOD is a half of the diverging angle (half value of whole angle) of the light source, that is, 5°. Therefore, fa=3.9/ (2×sin5°)=22.4 mm is obtained according to the equation (2).

On the other hand, in FIG. 6B, the light taking angle θdvd is given according to the following equation based on a general formula of Gaussian distribution.

$$\theta dvd= [\{ln(Ra)/ln(Rb)\}\times\theta aod^2] \ 1/2 \tag{3}$$

If Ra=0.3, Rb=0.5 and θdvd=6.6° in the equation (3), fb=17.0 mm is given by the equation (2). Moreover, if f1=12 mm and f2=-20 mm in the equation (1), the values of the synthetic focal distances fa and fb can be given near da=3 mm and db=6 mm, respectively.

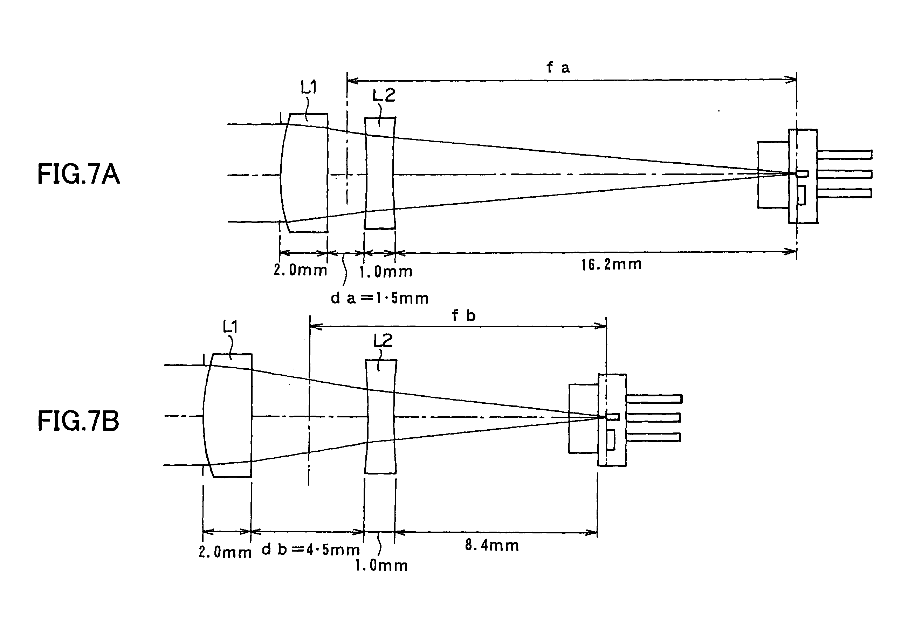

FIGS. 7A and 7B show the coupling lens system 3 which is designed practically from the above results. When the thickness of the coupling lens L1 is set to 2.0 mm, the thickness of the coupling lens L2 is set to 1.2 mm, and the focal distances of the lenses are set to f1=12mm and f2=-20mm, the synthetic focal distances are fa=22.4 mm and fb=17.0 mm near da=1.5 mm and db=4.5 mm, respectively.

That is, by moving the coupling lens L1 in a direction away from the coupling lens L2 by 3 mm, the minimum value of RIM to each aperture diameter can be acquired, which satisfies the conditions.

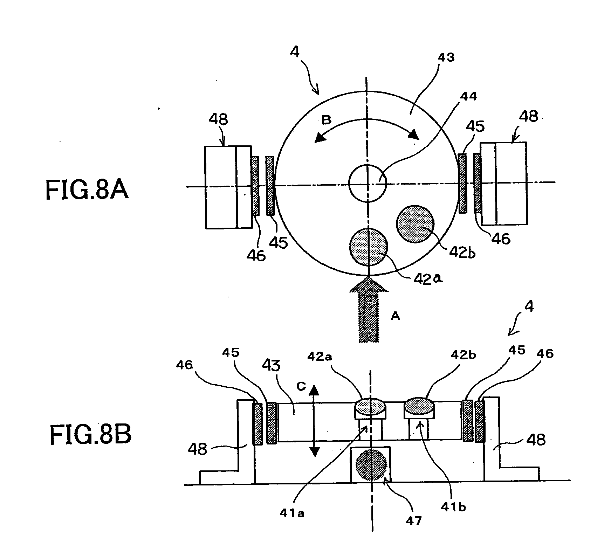

In the meantime, the objective lenses 42a and 42b are mounted on the two-axis actuator 4 of a rotary switching type as shown in FIGS. 8A and 8B.

That is, the actuator 4 has a disk-shaped holder 43 having tow through holes formed in a direction of the thickness thereof, and the apertures 41a and 41b and the objective lenses 42a and 42b are provided in the through holes, respectively. The holder 43 is rotatable in a direction indicated by arrows B about a shaft 44 penetrating at the center of the holder 43. Moreover, a coil 45 is provided in a peripheral portion of the holder 43. The coil 45 has a function of a track coil and a focus coil. Further, there is provided a magnet outside the coil 45 at a position close to the coil 45 with a predetermined gap therebetween. An upward-directing mirror 47 is provided under the holder 43.

In the thus-constructed actuator 4, a light beam is reflected by the upward-directing mirror 47, and is incident on the objective lens 42 through the aperture 41a. The actuator 4 performs switching between the objective lenses 42a and 42b and a tracking servo operation by rotating in the direction B.

Additionally, the holder 43 moves in a direction indicated by arrows C by a magnetic force by the coil 45 and a magnet 46 so as to perform a focus servo operation.

The optical pickup apparatus performs recording and reproduction on both the DVD 5a and the CD 5b by converging the light beams from the laser light sources 11L and 12L onto the DVD 5a and the CD 5b (both are optical information recording media), respectively, as shown in FIGS. 5A and 5B. The optical pickup apparatus comprises: the laser light sources 11L and 12L corresponding to the DVD 5a and the CD 5b; the coupling lens system (a coupling lens) 3 including the first coupling lens (a group of lenses) 31 and the second coupling lens (a group of lenses) 32 that are common to the laser light sources 11L and 12L so as to converge the light beams from the laser light sources 11L and 12L by the first coupling lens 31 and the second coupling lens 32; the apertures (opening parts) 41a and 41b that can change the aperture diameter in accordance with the laser light sources 11L and 12L; the objective lenses 42a and 42b that converge the light beams passed through the apertures 41a and 41b onto the recording surfaces of the DVD 5a and the CD 5b, respectively; and the actuator (lens moving means) 33 for moving at least one of the first coupling lens 31 and the second coupling lens 32 in accordance with the aperture diameters of the apertures 41a and 41b.

It should be noted that, in the present invention, the number of the laser light sources of the optical system is not limited to two. Additionally, the number of groups of the coupling lens system is not limited to two.

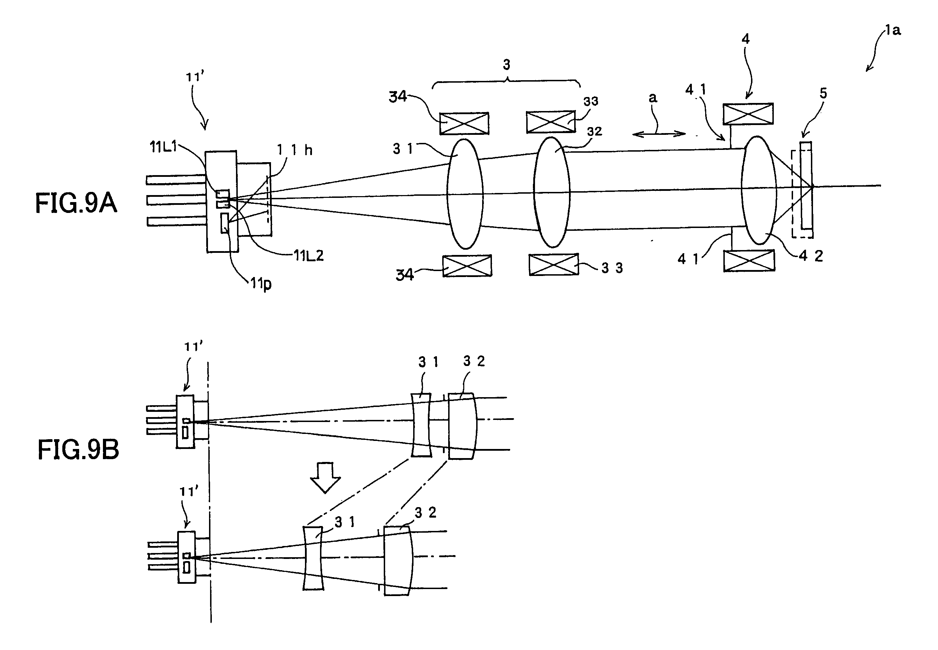

FIG. 9A is an illustration showing an optical system 1a of an optical pickup apparatus provided with a hologram unit 11' having two laser light sources 11L1 and 11L2. In the optical system 1a, the hologram 11h and the light-receiving elements 11p are common to the two laser light sources 11L1 and 11L2. It is configured and arranged so that an optimum RIM and coupling efficiency are acquired for each of the two laser light sources 11L1 and 11L2 by driving independently the first coupling lens 31 and the second coupling lens 32 by the single-axis actuators 34 and 33, respectively. In this respect, a distance between the two laser light sources 11L1 and 11L2 is set to a value equal to or smaller than several hundreds μm.

It should be noted that, in such a case, the objective lenses 42a and 42b shown in FIGS. 5A and 5B are made common as an objective lens 42 by causing one of the incident light beams to be diverging light or providing a diffraction grating on the lens surface to make a diffraction lens. At this time, the apertures 41a and 41b are also made common as an aperture 41 by using a wavelength filter having wavelength selectivity or diffraction grating.

That is, the objective lenses 42a and 42b are common to the laser light sources 11L and 12L.

Moreover, two laser light sources 11L and 12L are arranged so that a distance between the light - emitting points of both is set equal to or smaller several hundreds μm, and the single-axis actuators (lens moving means) 34 and 33 are provided for moving the first coupling lens 31 and the second coupling lens 32 of the coupling lens system 3 in the direction "a" of the optical axis in accordance with the aperture diameters of the two laser light sources 11L and 12L, respectively.

FIG. 9B is an illustration showing a state where the first coupling lens 31 and the second coupling lens 32 are moved by driving the single-axis actuators 34 and 33 independently.

In the meantime, when light source wavelengths are different such as the case of AOD and DVD, a color aberration is generated in the lens system and the substrate even if the numerical aperture (NA) and the substrate thickness are the same. The color aberration can be corrected by making the light beam from the coupling lens system 3 non-parallel by further moving the first coupling lens 31 and the second coupling lens 32 by predetermined distances by the single-axis actuators 34 and 33. Therefore, the coupling lens system 3 can obtain the a good spot which always have no aberration by being driven in consideration of the chromatic aberration beforehand at the time of switching the light source.

That is, the wavelengths of the two laser light sources 11L and 12L are different from each other, and after moving at least one group of lenses of the first coupling lens 31 and the second coupling lens 32 by the single-axis actuator (lens moving means) 34 and 33 in accordance with the aperture diameters of the apertures (opening parts) 41a and 41b, at least one group of lenses of the first coupling lens 31 and the second coupling lens 32 is moved further in the direction "a" of the optical axis in accordance with the wavelengths of the two laser light sources 11L and 12L. It should be noted that the number of the laser light sources is not limited to two.

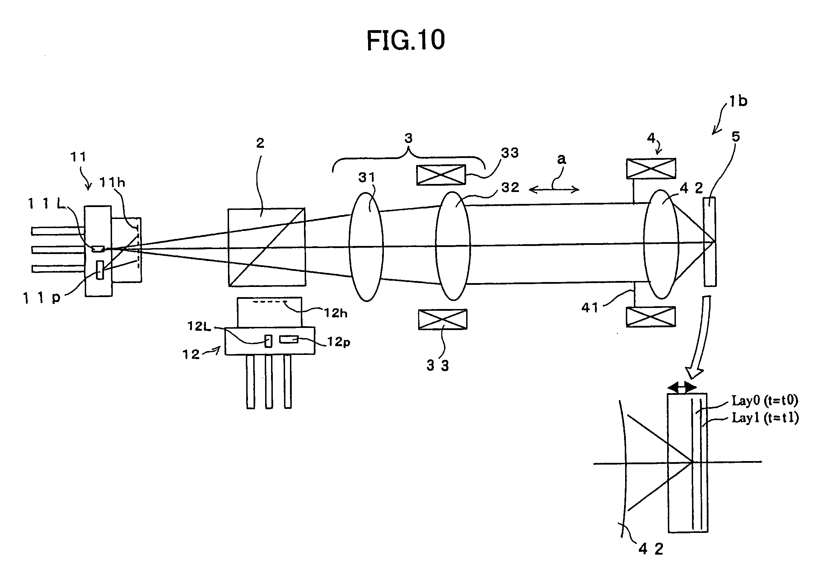

As shown in FIG. 10, in a case of an optical information recording medium 5 having a plurality of recording surfaces formed in layers, a spherical aberration is generated in an optical system 1b of an optical pickup apparatus as shown in FIG. 10 since the thicknesses of the optical transmission layers are different from each other. The spherical aberration can be corrected by making the light beam from the coupling lens non-parallel. If a thickness t of a first layer Lay0 of the optical transmission layers is t0, the spherical aberration generated by the first layer Lay0 is corrected beforehand by the objective lens 42 when designing, and, thus, an the light beam from the coupling lens system 3 is a parallel light. However, if the thickness t of the second layer Lay1 of the optical transmission layer is set to t1, a spherical aberration corresponding to the difference between t1 and t0 is generated. At this time, the second coupling lens 32 is moved by the single-axis actuator 33 in the direction "a" of the optical axis and the light beam from the coupling lens system 3 is a non-parallel light, which causes the light beam canceling the spherical aberration is incident on the objective lens.

Therefore, in the coupling lens system 3, a good beam spot having no aberration can always be obtained by the second coupling lens 32 being moved to correct the spherical aberration when switching the layers of the optical information recording medium 5.

That is, at least one optical information recording medium 5 from among a plurality of information recording media is formed in a layer structure to have two recording layers Lay0 and Lay1, and after moving at least one group of lenses of the first coupling lens 31 and the second coupling lens 32 in accordance with the aperture diameter of the aperture (opening part) 41 by the single-axis actuator (lens moving means) 33, at least one group of lenses of the first coupling lens 31 and the second coupling lens 32 is moved further by the single-axis actuator 33 in accordance with the plurality of recording surfaces Lay0 and Lay1.

It should be noted that the number of recording surfaces of the optical information recording media 5 is not limited to two.

It should be noted that the thickness t of each of the optical transmission layers of the optical information recoding medium 5 varies from a design thickness due to manufacturing tolerance, temperature change, etc. A spherical aberration is generated due to such variation, but such a spherical aberration can be corrected by making the light beam from the coupling lens system 3 non-parallel. Therefore, a thickness measuring means (not shown in the figure) is provided in the optical system 1b so as to measure the thickness t of each optical transmission layer of the optical information recording medium 5, and the coupling lens system 3 is moved so as to correct the spherical aberration in accordance with the measured value so that a good beam spot having no aberration is always obtained.

That is, at least one optical information recording medium 5 from among a plurality of optical information recording media has two recording surfaces Lay0 and Lay1, and after moving at least one group of lenses of the first coupling lens 31 and the second coupling lens 32 in accordance with the aperture diameter of the aperture (opening part) 41 by the single-axis actuator 33, at least one group of lenses of the first coupling lens 31 and the second coupling lens 32 is moved further by the single-axis actuator 33 in accordance with the variation in the thickness of the optical transmission layers.

It should be noted that the number of recording surfaces of the optical information recording medium 5 is not limited to two.

Moreover, the wavelengths of the laser light sources 11L and 12L fluctuate as design wavelengths as a center of fluctuation due to changes in temperature and output power. According to the wavelength fluctuation, a chromatic aberration is generated in the lens system or the substrate. The chromatic aberration can be corrected by making the light beam from the coupling lens system 3 non-parallel. Therefore, wavelength measuring means (not shown in the figure) is provided in the optical system 1b so as to measure the wavelength of each of the laser light sources 11L and 12L, and the coupling lens system 3 is moved so as to correct the chromatic aberration in accordance with the measured value so that a good beam spot having no aberration is always obtained.

That is, after moving at least one group of lenses of the first coupling lens 31 and the second coupling lens 32 in accordance with the aperture diameter of the aperture (opening part) 41 by the single-axis actuator 33, at least one group of lenses of the first coupling lens 31 and the second coupling lens 32 is moved further in the direction "a" of the optical axis by the single-axis actuator 33 in accordance with the fluctuations in the wavelengths of the laser light sources 11L and 12L.

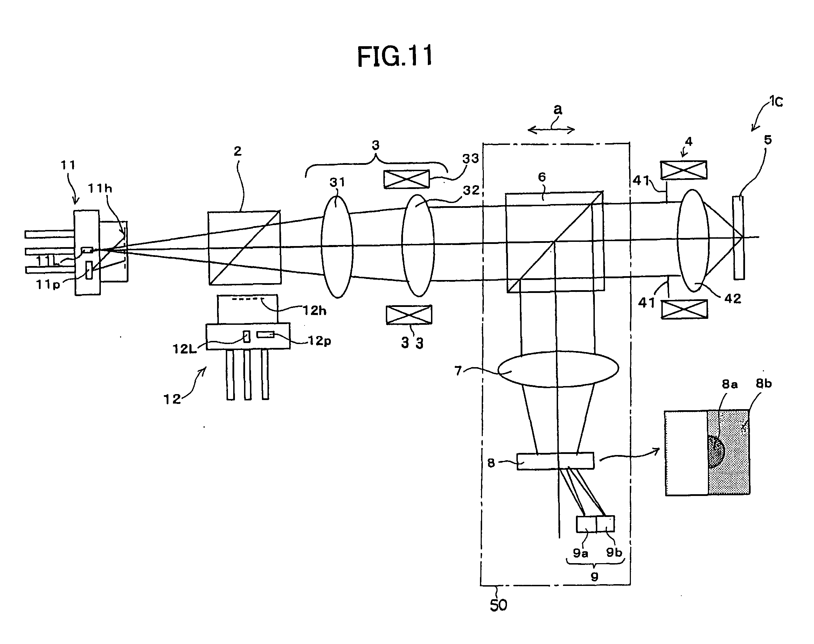

FIG. 11 shows an example of the optical pickup apparatus in which spherical aberration detecting means 50 is added between the coupling lens system 3 and the actuator 4 of the optical system 1b shown in FIG. 10. The spherical aberration detecting means 50 comprised a beam splitter 6, a lens 7, a hologram 8, a light-receiving element 9, etc. It should be noted that the hologram 8 has two different diffraction areas 8a and 8b, and the light-receiving element 9 has two light-receiving elements 9a and 9b. Other structures are the same as that shown in FIGS. 5A and 5B, and descriptions thereof will be omitted.

In this example, a part of the light beam reflected by the optical information recording medium 5 is reflected by the beam splitter 6, and is converged by the lens 7. The converged light beam is diffracted by the diffraction areas 8a and 8b toward the light-receiving elements 9a and 9b, respectively. Thus, an amount and a direction of the spherical aberration of the light reflected by the optical information recording medium 5 cab be detected by comparing amounts of light received by the light-receiving elements 9a and the light-receiving element 9b with each other. It should be noted that if there is a color aberration, the color aberration can also be detected by the same detecting means.

Therefore, according to the spherical aberration detecting means 50, a spherical aberration or a color aberration can be prevented from being generated in the disc surface spot by causing the detection signal to be zero by moving the first coupling lens 31 or the second coupling lens 32 of the coupling lens system 3.

That is, the optical pickup apparatus is provided with the spherical aberration detecting means 50 that corresponds to at least one of the laser light sources 11L and 12L.

In the meantime, a semiconductor laser as a laser light source has a characteristic in that a wavelength changes immediately as an output power changes. Accordingly, a chromatic aberration is generated due to the slight difference in wavelength between reproduction time and recording time. Since this chromatic aberration is generated rapidly, there may be a time lag if it is corrected by moving a coupling lens system, which causes an error in reproduction or recording.

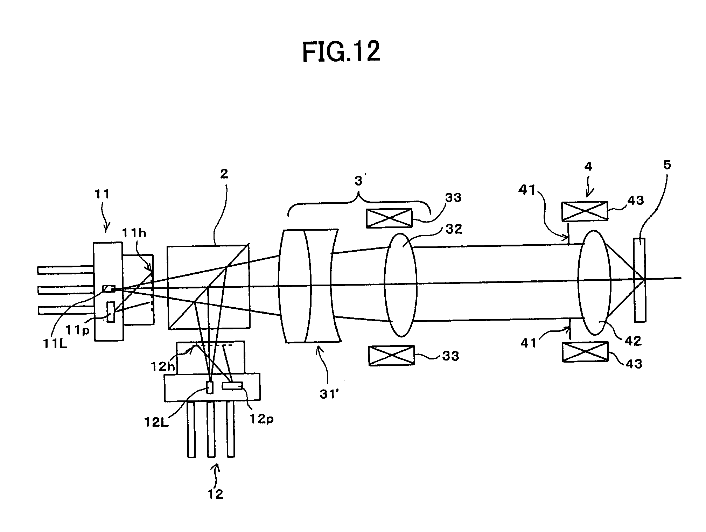

In order to solve this problem, it is effective to use an achromatic lens as the coupling lens. Specifically, as shown in FIG. 12, a laminated lens is used as a first coupling lens 31', which is a fixed side of the coupling lens system 3. That is, the first coupling lens 31' of the coupling lens system 3 is an achromatic lens, which corrects the chromatic aberration of the spot formed by converging a light beam from at least one of the laser light sources 11L and 12L on the recording surface of the optical information recording medium 5.

It should be noted that the number of the laser light sources in the optical system of the optical pickup apparatus of the present invention is not limited to two.

Thereby, a chromatic aberration can be eliminated without increasing the weight of the driving part. It should be noted that structures other than the first coupling lens 31' of the coupling lens system 3 are the same as that shown in FIGS. 5A and 5B, and descriptions thereof will be omitted.

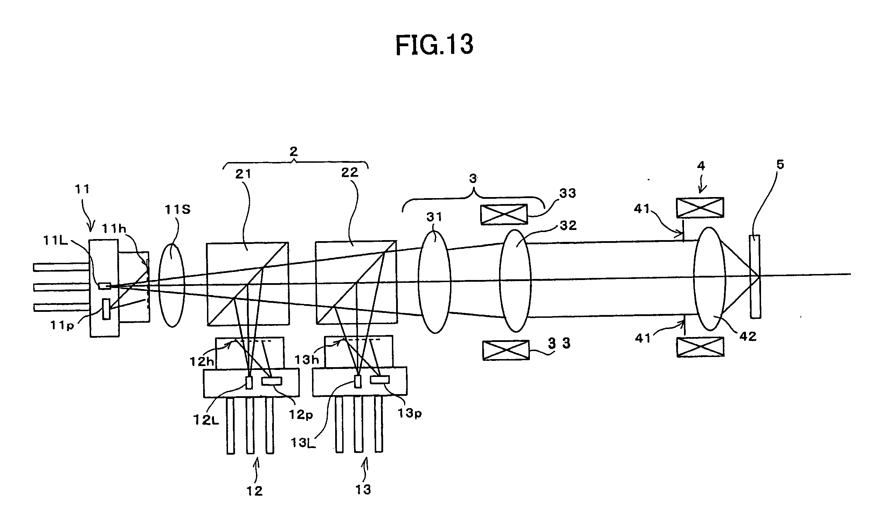

As shown in FIG. 13, when using three hologram units 11, i.e., the first hologram unit 11, the second hologram unit 12 and a third hologram unit 13, the travel distance of the second coupling lens 32 may become excessively large. In such a case, a fixed lens 11S may be provided to the laser light source 11L so as to reduce the travel distance of the second coupling lens 32. That is, fixed lens 11S, which changes a degree of divergence of the light beam from the laser light source 11L, is provided in an optical path between at least one of the three laser light sources 11L, 12L, 13L and the coupling lens system (coupling lens) 3.

It should be noted that the laser light source to which the fixed lens 11S is provided is not limited to the laser light source 11L. Moreover, the number of the hologram units is not limited to three. Other structures shown in FIG. 13 are the same as that shown in FIGS. 5A and 5B, and descriptions thereof will be omitted.

As appreciated from the above description, there is provided according to the present embodiment an optical pickup apparatus, which can couple light beams from a plurality of light sources with a simple structure, and is capable of correcting a chromatic aberration and a spherical aberration generated due to fluctuation in wavelength, a multi-layer disc structure, and a variation in thickness of a disc substrate.

It should be noted that the above-mentioned optical pickup is preferably mounted in an optical disc drive apparatus.

(Second Embodiment)

A description will now be given of a second embodiment of the present invention. It should be noted that parts that are equivalent to the parts described in the above description are given the same reference numerals, and descriptions there of may be omitted.

A light beam projected from a semiconductor laser is a radially expanding light beam, and a beam diameter parallel to the junction plane of the semiconductor laser is different from a beam diameter of perpendicular to the junction plane. For this reason, in an optical pickup apparatus, generally, the beam diameters in all directions are equalized by using a beam shaping prism so as to equalize a rim intensity of the light beam incident on an objective lens having a circular aperture, thereby suppressing reduction in an amount of light.

However, a beam shaping prism cannot be provided in an optical system using a CL expander since an optical path is a diverging/converging optical path. For this reason, in order to perform beam shaping plastic using in the optical system using the CL expander, it is desirable to apply an optical system in which a beam shaping lens is arranged between an light source and a coupling lens capable of changing a magnification.

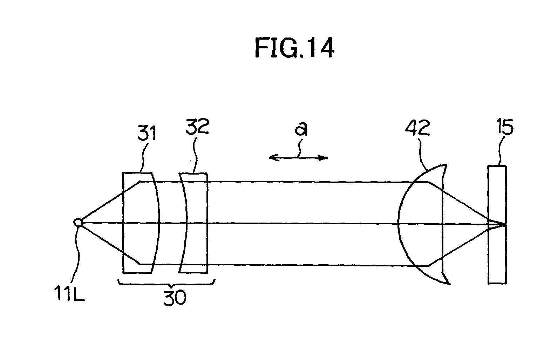

Thus, as shown in FIG. 14, a cupping lens system 30 is constituted by a first coupling lens 31 that changes a diverging light beam projected from the light source 11L into a light beam substantially parallel to the optical axis and a second coupling lens (first means) 32 that corrects a chromatic aberration of the entire optical system, so as to reduce a chromatic aberration of the optical system generated due to wavelength fluctuation of the light source 11 by a chromatic aberration correction of a diffracting part. In the optical system, a spherical aberration generated due to a variation in wavelength of the light source 11L is reduced by setting by a second means a distance between the light source 11L and a first surface on which the light beam from the light source 11L is incident.

Accordingly, an aberration due to wavelength fluctuation is reduced by the second coupling lens (diffraction surface: first means) provided in the coupling lens system 30, and an aberration due to wavelength variation is reduced by the second means which adjusts the distance between the light source 11L and the coupling lens system 30 in the direction "a" of the optical axis within a wide range of a short wavelength.

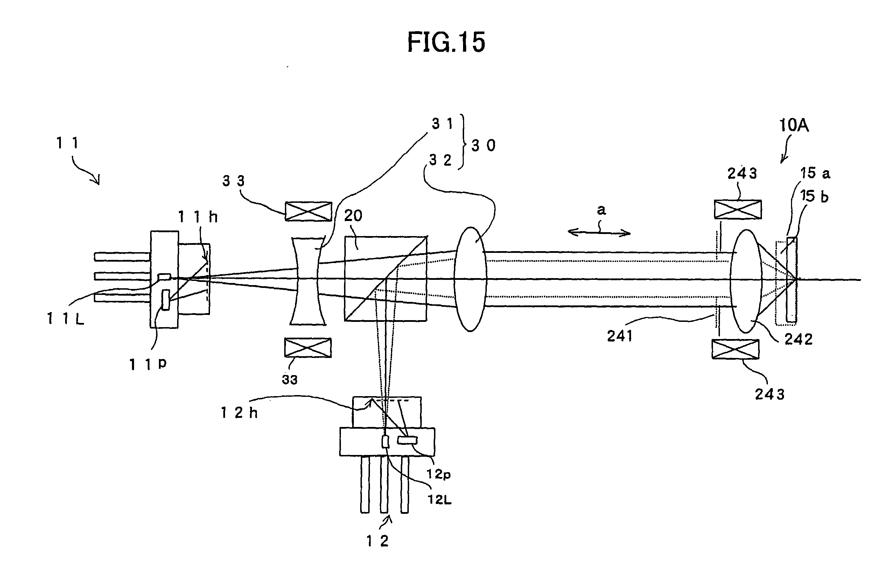

FIG. 15 is an illustration of an optical system of an optical pickup apparatus according to a second embodiment of the present invention. The optical system 10A shown in FIG. 15 comprises a first hologram unit 11, a first coupling lens (a group of lenses) 31, a beam splitter (optical path synthesizing and separating means) 20, a second coupling lens (a group of lenses) 32, an aperture 241 and an objective lens 242 that are arranged along a straight line in that order. The optical system 10A also comprises a second hologram unit 12, which faces the beam splitter 2 and has an optical axis perpendicular to the straight line.

It should be noted that the first coupling lens system 30 includes the first coupling lens (a group of lenses) 31, a second coupling lens (a group of lenses) 32. Additionally the first coupling lens 31 is provided with a single-axis actuator 33 for driving the first coupling lens 31 in the direction "a" of the optical axis, etc.

The objective lens 242 is moved by an actuator 243 in the direction "a" of the optical axis. Here, although a dichroic prism utilizing a difference in wavelength between the first hologram unit 11 and the second hologram unit 12 is used as the beam splitter 20, a polarizing prism may be used instead.

The first hologram unit 11 is provided with a laser light source 11L, a hologram element 11h for acquiring a necessary signal by diffracting a light reflected by an optical information recording medium, and a light-receiving element 11p for generating various signals. In this example, the first hologram unit 11 performs recording and reproduction on a DVD (optical information recording medium) 15a.

Similarly, the second hologram unit 12 is provided with a laser light source 12L, a hologram element 12h for acquiring a necessary signal by diffracting a light reflected by an optical information recording medium, and a light-receiving element 12p for generating various signals. In this example, the second hologram unit 12 performs recording and reproduction on a CD (optical information recording medium) 15b.

That is, the optical recording apparatus performs recording and reproduction on both the DVD 15a and the CD 15b by converging the light beams from the light sources 11L and 12L onto the DVD 15a and the CD 15b (both are optical information recording media), respectively. The optical pickup apparatus comprises: two light sources 11L and 12L corresponding to the DVD 15a and the CD 15b; the beam splitter (optical synthesizing and separating means) 20 for synthesizing and separating the light beams from the two light sources 11L and 12L; at least one group of lenses (first coupling lens 31) common to the light sources 11L and 12L; the coupling lens system (a coupling lens) 30 including a plurality of groups of lenses including the first coupling lens 31 so as to converge the light beams from the light sources 11L and 12L, the plurality of groups of lenses constituting the coupling lens system 30 being located in the direction of the optical axis of at least one light source 11L with the beam splitter interposed therebetween; the objective lenses 242 that converges the light beams passed through the coupling lens system 30 onto the recording surfaces of the DVD 15a and the CD 15b corresponding to the light sources 11A and 12L, respectively; and the actuator (lens moving means) 33 for moving at least the first coupling lens 31 from among the plurality of group of lenses in the direction "a" of the optical axis. It should be noted that the number of groups of lenses constituting the coupling lens system 30 is not limited to two.

Moreover, the actuator (lens moving means) 33 is not limited to move the first coupling lens (one group of lenses) 31, and may move the second coupling lens (one group of lenses) 32. Further, the first coupling lens (one group of lenses) 31 moved by the actuator (lens moving means) in the direction "a" of the optic axis may be arranged between the light source 11L and the beam splitter (optical path synthesizing and separating means) 20, or may be arranged between the beam splitter (optical path synthesizing and separating means) 20 and the objective lens 242.

In FIG. 15, a light beam emitted by the first hologram unit 11 is indicated by solid lines, and a light beam emitted by the second hologram unit 12 is indicated by dotted lines.

In FIG. 15, the light beam from the first hologram unit 11 transmits the first coupling lens 31, which has been appropriately moved by the single-axis actuator 33, and the beam splitter 20, and further transmits the second coupling lens 32, which changes the light beam into a parallel light. The parallel light beam is then limited appropriately in its aperture diameter by the aperture 41, and is converged onto the recording surface of the DVD 15a by the objective lens 242. The light reflected by the DVD 15a is incident on the first hologram unit 11 again after passing through the objective lens 242, the second coupling lens 32, the beam splitter 20 and the first coupling lens 31. The light-receiving element 11p of the first hologram unit 11 generates a track signal, a focus signal, information signal, etc., in accordance with the light received by the light receiving unit 11p.

On the other hand, the light beam from the second hologram unit 12 is reflected by the beam splitter 20 and transmits the second coupling lens 32, which changes the light beam into a parallel light. The parallel light beam is then limited appropriately in its aperture diameter by the aperture 41, and is converged onto the recording surface of the CD 15b by the objective lens 242. The light reflected by the CD 15b is incident on the second hologram unit 12 again after passing through the objective lens 242, the second coupling lens 32 and the beam splitter 20. The light-receiving element 12p of the second hologram unit 12 generates a track signal, a focus signal, information signal, etc., in accordance with the light received by the light receiving unit 12p.

It should be noted that, the objective lens 242 is servo-controlled by a two-axis actuator 243 in accordance with the track signal and the focus signal so s to always follow a movement of the disc so that a beam spot of a diffraction limit is formed on the DVD 15a or the CD 15b.

The parallel light from the coupling lens is limited in its aperture to an aperture diameter corresponding to NA0.65 for the DVD 15a and NA0.50 for the CD 15b by the aperture (wavelength aperture limiting element) 41.

The objective lens 242 is a DVD/CD compatible diffraction lens, and each beam is converged onto a recording surface of a disc having a substrate thickness of 0.6 mm for the DVD 15a or a recording surface of a disc having a substrate thickness of 1.2 mm for the CD 15b. The light reflected by the DVD 15a or the CD 15b is incident on the hologram unit 11 or 12 again, and the track signal, the focus signal, the information signal, etc., are generated by the light-receiving element 11p or 12p.

A description will be given of a coupling efficiency of light beams.

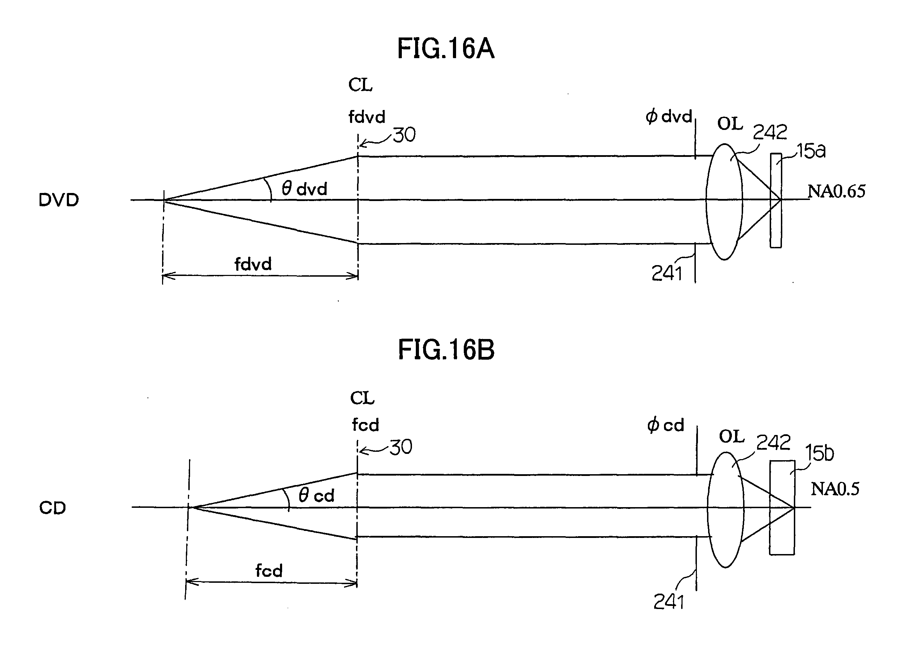

From FIG. 16A, if a light taking angle $\theta$ of the diverging light which satisfies the aperture diameter $\phi$dvd of the objective lens 242 and an RIM specification (a specification of a light intensity at an aperture part when an intensity of light at the optical axis is 100) for the DVD 15a is determined, a focal distance fdvd of the coupling lens for the DVD 15a is given by the following equation.

$$fdvd = \phi dvd / (2 \times \sin\theta dvd) \qquad (4)$$

Similarly, from FIG. 16B, a focal distance fcd for the CD 15b is given by the following equation

$$fcd = \phi cd / (2 \times \sin\theta cd) \qquad (5)$$

The following Table 2 indicates specific examples for the DVD and the CD.

Table 2

|  | DVD | CD |  |
|---|---|---|---|
| DIVERGING ANGLE OF LIGHT SOURCE (HALF VALUE) $\theta$ LD | 10° | 10° | ACTIVE LAYER PARALLEL DIRECTION IN SEMICONDUCTOR LASER |
| MINIMUM VALUE OF RIM | 30% | 15% |  |
| FOCAL DISTANCE OF OBJECTIVE LENS fol | 3mm | 3mm |  |

Table 2 (continued)

| | DVD | CD | |
|---|---|---|---|
| DIVERGING ANGLE OF LIGHT SOURCE (HALF VALUE) θ LD | 10° | 10° | ACTIVE LAYER PARALLEL DIRECTION IN SEMICONDUCTOR LASER |
| NUMERICAL APERTURE (NA) | 0.65 | 0.50 | |
| APERTURE DIAMETER Φdvd. Φcd | 3.9 | 3.0 | Φ=2 × fol × NA |
| LIGHT TAKING ANGLE θ dvd, θ cd | 6.6° | 8.3° | |

The beam taking angles θ for the DVD and the CD are given by the following equation according to a general formula of a Gaussian distribution.

$$\theta=[\{\ln(RIM)/\ln 0.5\}\times(\theta LD/2)^2]^{1/2} \tag{6}$$

By substituting values for the light taking angle θ and the aperture diameter φ for the DVD and CD in the equation (1), fdvd=17.0 mm and fcd=10.4 mm are obtained.

Therefore, in FIGS. 16A and 16B, an optimum coupling optical system can be acquired by arranging the coupling lens system 30 so that the focal distance between the laser light source 12L and the second coupling lens 32 is set to 10.4 mm and the synthesized focal distance between the laser light source 11L, the first coupling lens and the second coupling lens 32 is set to 17 mm.

Here, the synthetic focal distance in two lenses is given by the following equation.

$$1/f=1/f1+1/f2-d/ (f1\times f2) \tag{7}$$

f1: focal distance of a first lens
f2: focal distance of a second lens
d: interval between the first lens and the second lens

According to the above equation (7), it can be appreciated that if f2=fcd=10.4 mm and d=6, f=fdvd=17 mm is obtained near f1=-11.

Examples of the coupling lens designed according to the above-mentioned equations are indicated in the following Table 2 and Table 3.

With a practical thick lens, the synthetic focal distance of f=17.0 mm was obtained by setting the focal distances to f1=-9.08 mm and f2=10.4 mm. It should be noted that, in these examples, the thickness of the hologram substrate of each hologram unit is neglected.

Additionally, in the Tables 2 and 3, an aspherical surface 1: k=0, A4=-0.4378×10⁻⁴ A6=0.×10⁻⁴, A8=-0.1247×10⁻⁴; and an aspherical surface 2: k=0, A4=-0.4029×10⁻³, A6=0.7711×10⁻⁵ and A8=-0.1402×10⁻⁶.

The following equation (8) was used for the design.

$$Z=ch^2/ (1+\{1-(1+k)c^2h^2\}+A4h^4+A6h^6+A8h^8+A10h^{10} \tag{5}$$

where Z is a coordinate of a surface configuration in an optical axis direction, c is an inverse number (curvature) of a radius r of curvature of a surface, h is a radius in a direction perpendicular to an optical axis, k is a conic coefficient, and A4, A6, A8 and A10 are aspheric surface coefficients.

Table 3

| DVD | RADIUS OF CURVATURE | DISTANCE BETWEEN SURFACES | MATERIAL | |
|---|---|---|---|---|
| 1 | - | 6.41 | AIR | LIGHT SOURCE 11L |
| 2 | -2.37 | 1.0 | BK7 | FIRST COUPLING LENS 31 |
| 3 | -5.51 | 1.0 | AIR | ASPHERICAL SURFACE 1 |

Table 3 (continued)

| DVD | RADIUS OF CURVATURE | DISTANCE BETWEEN SURFACES | MATERIAL | |
|---|---|---|---|---|
| 4 | - | 4.0 | BK7 | BEAM SPLITTER 20 |
| 5 | - | 1.0 | AIR | |
| 6 | 31.28 | 1.5 | BK7 | SECOND COUPLING LENS 32 |
| 7 | -6.30 | - | AIR | ASPHERICAL SURFACE 2 |

Table 4

| CD | RADIUS OF CURVATURE | DISTANCE BETWEEN SURFACES | MATERIAL | |
|---|---|---|---|---|
| 1 | - | 4.91 | AIR | LIGHT SOURCE 12L |
| 2 | - | 4.0 | BK7 | BEAM SPLITTER 20 |
| 3 | - | 1.0 | AIR | |
| 4 | 31.28 | 1.5 | BK7 | SECOND COUPLING LENS 32 |
| 5 | -6.30 | - | AIR | ASPHERICAL SURFACE 2 |

In the present embodiment, the actuator (lens moving means) 33 is provided to the first coupling lens 31 so as to move the first coupling lens 31 in the direction "a" of the optical axis. Thereby, it is possible to correct a spherical aberration generated in each optical surface (recording surface) of the DVD (optical information recording medium) 15a with respect to the light beam of the light source 11L.

However, when the actuator 33 is provided to the first coupling lens 31, a spherical aberration cannot be corrected with respect to the light source 12L.

When setting the wavelength of the light source 11L to 405 nm and the wavelength of the light-source 12L to 660 nm and if polycarbonate is used as a material of a substrate of the optical disc, refraction indices n(405) and n(660) at the wavelengths are n(405)=1.621 and n(660)=1.579. If the thickness of the substrate of the optical disc varies by 70 μm, the spherical aberrations Δw(405) and Δw(660) generated at the wavelengths are Δw(405)=0.007λ and Δw(660)=0.004λ. Accordingly, it is appreciated that a spherical aberration Δw tends to be generated as the wavelength is shorter.

$$\Delta W = \frac{1}{48\sqrt{5}} \frac{n^2 - 1}{8n^3} (NA)^4 \frac{t}{2}$$

NA: aperture of objective lens
t: thickness of substrate

Other examples of design using the above-mentioned equation (8) are shown in the following Table 4 and Table 5. It should be noted that a refraction index and an Abbe number of a nitration material shown in Table 7 are used.

Table 5

| | RADIUS OF CURVATURE | THICKNESS | MATERIAL |
|---|---|---|---|
| OBJECT SURFACE | - | 0 | |
| 1 | - | 1.5 | |
| 2 | - | 1.5 | BK7_SCHOTT |
| 3 | - | 0.5 | |

Table 5   (continued)

|  | RADIUS OF CURVATURE | THICKNESS | MATERIAL |
|---|---|---|---|
| 4 | - | 3.2 | TAF1_HOYA |
| 5 | - | 0.1 |  |
| 6 | -454.8985 | 2.0 | BK7_SCHOTT |
| 7 | -11.32789 | 1.9707 |  |
| 8 | - | 5.0 | BK7_SCHOTT |
| 9 | - | 0.5 |  |
| 10 | 64.48589 | 3.0 | BK7_SCHOTT |
| 11 | -9.95256 | 0 |  |
| APERTURE SURFACE | - | 0 |  |
| 13 | 2.01507 | 1.7 | 'vc' |
| 14 | -18.13584 | 1 |  |
| 15 | - | 0.64 | 'PC' |
| 16 | - | 0.64099 |  |
| IMAGE SURFACE | - | 0 |  |

Table 6

| SURFACE | CONFIGURATION | KORENICH COEFFICIENT | FOURTH COEFFICIENT | SIXTH COEFFICIENT | EIGHTH COEFFICIENT | TENTH COEFFICIENT |
|---|---|---|---|---|---|---|
| 6 | ASPHERIC SURFACE | 0 | 8.18E-04 | -5.92E-05 | 7.88E-05 | -1.76E-05 |
| 7 | ASPHERIC SURFACE | 0 | 4.62E-04 | -1.38E-05 | 1.93E-05 | -2.68E-06 |
| 11 | ASPHERIC SURFACE | 0 | 9.5DE-05 | 7.21E-07 | 4.82E-09 | 2.37E-11 |
| 18 | ASPHERIC SURFACE | -0.674258 | 3.65E-03 | 4.10E-05 | 8.16E-05 | -4.45E-05 |
| 19 | ASPHERIC SURFACE | 69.056492 | 1.33E-02 | -4.11E-03 | 5.95E-04 | -2.01E-05 |

Table 7

| GLASS MATERIAL | REFRACTION INDEX | ABBE NUMBER |
| --- | --- | --- |
| BK7_SCHOTT | 1.5168 | 64.16641024 |
| TAF1_HOYA | 1.7725 | 49.62353044 |
| 'vc' | 1.606142 | 58.59557118 |
| 'PC | 1.584991 | 30.21771276 |

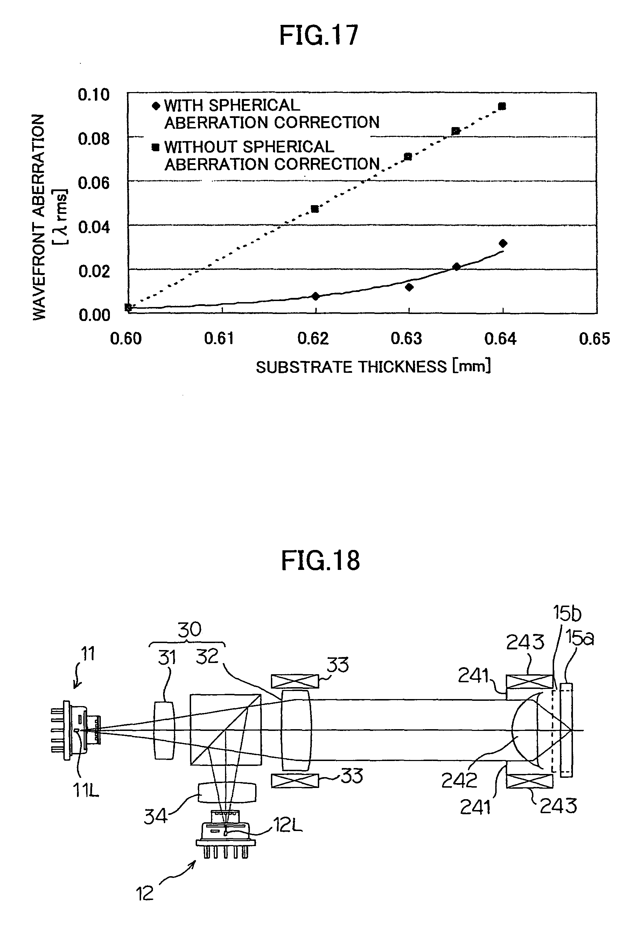

In the above, the first coupling lens 31 corresponds to surfaces 6-7 and the second coupling lenses 32 corresponds to surfaces 10-11. Here, if the thickness of the surface 15 increases and a spherical aberration is generated, a wavefront aberration reducing effect as shown in FIG. 17 can be obtained by moving the first coupling lens 31 in the direction "a" of the optical axis. It should be noted that the actuator 33 may be provided to the lens having a largest absolute value of the focal distance from among the tow groups of lenses (the first coupling lens 31 and the second coupling lens 32) that constitute the coupling lens system 30.

An amount of divergence with respect to an amount of shift in the optical axis direction of a lens decreases as an absolute value of a focal distance of the lens to be moved increases. For this reason, in order to relax the drive accuracy of the lens to the spherical aberration correction with respect to the light source 1, one of the first coupling lens 31 and the second coupling lens 32 whichever having a longer focal distance is moved.

An amount of divergence with respect to an amount of movement in the optical axis direction of a group of lenses decreases as an absolute value of a focal distance of the lens to be moved increases. That is, an amount of change in a spherical aberration with respect to a drive error decreases as an absolute value of a focal distance of the group of lenses to be moved increases. For this reason, in order to relax the drive accuracy of the group of lenses when correcting a spherical aberration of the light source 11L, one of the first coupling lens 31 and the second coupling lens 32 whichever having a longer focal distance is moved.

In the meantime, the lens located between the light source 11L and the beam splitter 20 is not limited to only the first coupling lens 31, and a plurality of groups of lenses may be used.

Moreover, the optical information recording medium such as the DVD 15a may have a plurality of recording surfaces formed in a layer structure, and at least one group of lenses of the coupling lens system 30 (the first coupling lens 31 or the second coupling lens 32) may be moved in the direction "a" of the optical axis by the actuator (lens moving means) 33 so as to converge the light beam with respect to each recording surface.

With respect to the DVD, there is a specification of double-layer recording surface, in which a spherical aberration is generated since a thickness of each layer varies. Although the spherical aberration seldom causes a problem when reading data from a ROM disc or the like, it may give a remarkable degradation to a recording characteristic such as erasure of adjacent marks when writing data on an R disc, an RW disc or the like. Therefore, by correcting the spherical aberration by changing a degree of divergence of a light beam incident on an objective lens by moving the coupling lens 31 in the optical axis direction in accordance with each layer, the characteristic can be improved for both recording and reproduction.

Further, the optical information recording medium such as the DVD 15a or the CD 15b may have optical transmission layers, and at lease one group of lenses of the coupling lens system 30 (the first coupling lens 31 or the second coupling lens 32) may be moved by the actuator (lens moving means) 33 in accordance with a variation in the thickness of each optical transmission layer.

Although it seldom causes a problem in CD or DVD, in the Blu-ray and the AOD disc of short wavelength, a spherical aberration is generated in a disc surface spot due to a manufacturing tolerance in a thickness of a disc substrate, which may degrade the recording and reproducing performance. In such a case, the spherical aberration can be corrected by changing a degree of divergence of a light beam incident on the objective lens 242 by moving the first coupling lens 31 or the second coupling lens 32 in the direction "a" of the optical axis in accordance with variation in the thickness of the substrate. An amount of movement of the lens may be adjusted so as to, for example, maximize amplitude of an RF signal.

Moreover, at lease one group of lenses of the coupling lens system 30 (the first coupling lens 31 or the second coupling lens 32) may be moved by the actuator (lens moving means) 33 in the direction "a" of the optical axis in accordance with a wavelength fluctuation of the light sources 11L and 12L.

Further, in the Blu-ray or the AOD disc, with a change in an ambient temperature or an output power, the wavelength of the light sources 11L and 12L may fluctuate and a chromatic aberration may be generated in a disc surface spot, which may cause a degradation in the recording and reproducing performance. In such a case, the color aberration can be corrected by changing a degree of divergence of a light beam incident on the objective lens 242 by moving the first coupling lens 31 or the second coupling lens 32 in the direction "a" of the optical axis in accordance with a wavelength fluctuation. An amount of movement of the lens may be adjusted so as to, for example, maximize amplitude of an RF signal.

Moreover, with respect to at least the light beam having a shortest wavelength, the coupling lens system 30 and the objective lens 242 through which the light beam passes may be an achromatic lens system. In such a case, a color aberration can be eliminated even when a wavelength is instantaneously changed such as in a mode hop, which reduces an error in recording and reproduction.

A wavelength of a semiconductor laser as a light source changes instantaneously when an output power thereof changes. Accordingly, the wavelength changes slightly between a time of reproduction and a time of recording, which may generate a chromatic aberration. Since the chromatic aberration is generated instantaneously, there is a time delay if a correction is performed by moving the coupling lens, which may be a cause of recording or reproducing error. Such a problem is remarkable particularly in the Blue-ray and AOD having a short wavelength. In order to solve this problem, it is effective to use an achromatic lens system. Using a laminated lens as the coupling lens 32 and using an achromatic diffraction lens as the objective lens 242, a color aberration due to mode hop can be eliminated in each lens system as shown in FIG. 17, which results in reduction of recording and reproducing error.

Additionally, the entire system of the coupling lens system 30 and the objective lens 242 through which a light beam passes may be an achromatic lens system.

A diffraction lens has a disadvantage, as compared to a refraction lens, that a transmittance is low while an aberration correcting function is high. If it is desired to make an optical system having a high transmittance, a refraction lens is used for the objective lens by making the DVD light beam of FIG. 17 as a diverging light. In such a case, in order to correct a chromatic aberration of the objective lens, a design is given to a coupling lens to have a chromatic aberration for correction. That is, achromatize is performed in a whole system of an optical system in which a coupling lens and an objective lens are combined.

It should be noted that, as shown in FIG. 18, a third coupling lens 34 may be provided between the second hologram unit 12 and the beam splitter 20 so as to change magnification of the light beam of the light source 12L by the third coupling lens 34, and chromatic aberration correcting means may be provided to the third coupling lens (a group of lenses) 34 for correcting a chromatic aberration of the second coupling lens and the objective lens 242. In this case, with respect to the light beam of the light source 12L, a coupling lens system is constituted by the third coupling lens 34 and the second coupling lens 32.

In this structure, the third coupling lens 34 has the chromatic aberration correcting function to correct collectively the chromatic aberration of the third coupling lens 34, the second coupling lens 32 and the objective lens 242. The chromatic aberration correcting function of the third coupling lens 34 is realizable by any one of methods of a laminated lens in which a plurality of lenses made of a glass material having different refraction indices, a combination lens, a diffraction lens having a surface provided with a diffraction surface.

The third coupling lens 34 is designed so as to satisfy the following conditions, where focal distances of lens elements 1 to n of the third coupling lens 34 are f31 to f3n, and partial dispersions are V31 to V3n.

$$\frac{1}{f_3} = \sum_{k=1}^{n} \frac{1}{f_{3k}}$$

$$\sum_{k=1}^{n} \frac{1}{f_{3k} \times \nu_{3k}} + \frac{1}{f_2 \times \nu_2} + \frac{1}{f_{OL} \times \nu_{OL}} = 0$$

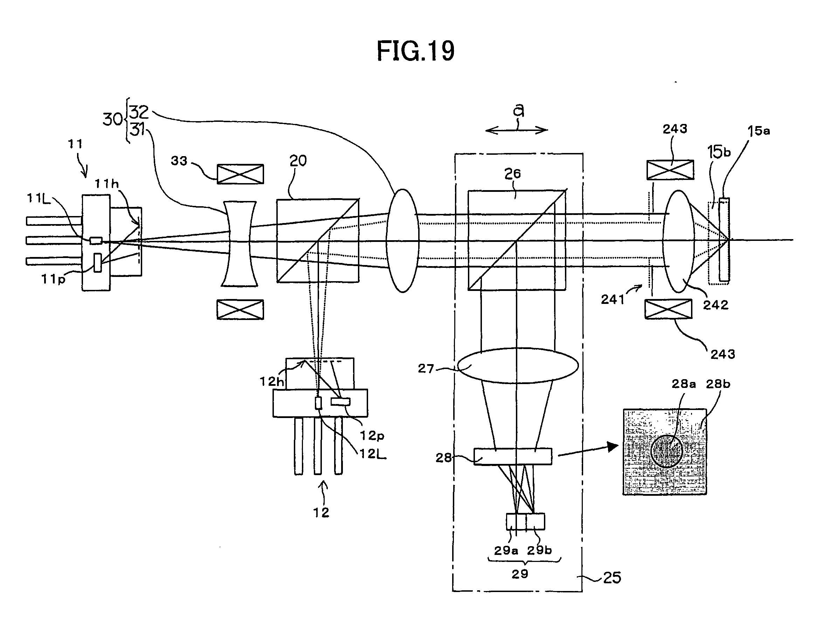

In the meantime, according to the present embodiment, as shown in FIG. 19, spherical aberration detecting means 25 may be provided for detecting a spherical aberration of a reflected light beam, which projected from the light source 11L or 12L and converged onto and reflected by a recording surface of the DVD (optical information recording medium) 15a or the CD (optical information recording medium) 15b.

The spherical aberration detecting means 25 comprise a beam splitter 26, a lens 27, a hologram 28, the light-receiving element 29, etc. It should be noted that the hologram 28 has two different diffraction areas 28a and 28b, and the light-receiving element 29 has two light-receiving elements 29a and 29b. Other structures are the same as that shown in FIG. 15, and descriptions thereof will be omitted.

The light beam incident on the hologram 28 is diffracted by the two different diffraction areas 28a and 28b toward the light-receiving elements 29a and 29b, respectively. Then, an amount and a direction of the spherical aberration of the light reflected by the disc can be detected by comparing amounts of light received by the light-receiving elements 29a and 29b. When there is a chromatic aberration, the chromatic aberration can also be detected by the detecting means.

Therefore, by causing a detection signal to become 0 by driving the coupling lens by the spherical aberration detecting means 25, it is possible to prevent generation of a spherical aberration or a chromatic aberration in a beam spot on a disc surface.

Moreover, in the coupling lens system 30, the first coupling lens (a group of lenses) located closest to the light source 11L may be a convex lens. According to such a structure, a diverging angle of a diverging light beam from the light-source 11L can be enlarged so as to increase an intensity of a rim of the light beam (RIM) incident on the objective lens 242. If the RIM becomes large, the diameter of a spot diameter on a disc surface is decreased, which improves the recording and reproducing performance.

In such a case, the wavelength $\lambda_A$, which is a wavelength of the optical beam passing through the first coupling lens (group of lenses) 31 which is a convex lens, and a wavelength $\lambda_B$, which is a wavelength of the light beam not transmitting the convex lens, are set so that a relationship $\lambda_A < \lambda_B$ is satisfied.

The wavelength is decreased in the order of CD, DVD and Blue-ray, the recording density is increased even if the difference in NA is considered, and it is necessary to further reduce a spot diameter on a surface of a disc. In such a case, when setting the wavelength of the light source 11L, which is on the side of the convex lens, shorter than the wavelength of the light source 12L, the RIM is increased, which realizes further reduction in the spot diameter on a surface of a disc.

On the other hand, the first coupling lens (a group of lenses) 31 closest to the light source 11 or the third coupling lens (a group of lenses) 34 closest to the light source 12L may be a convex lens.

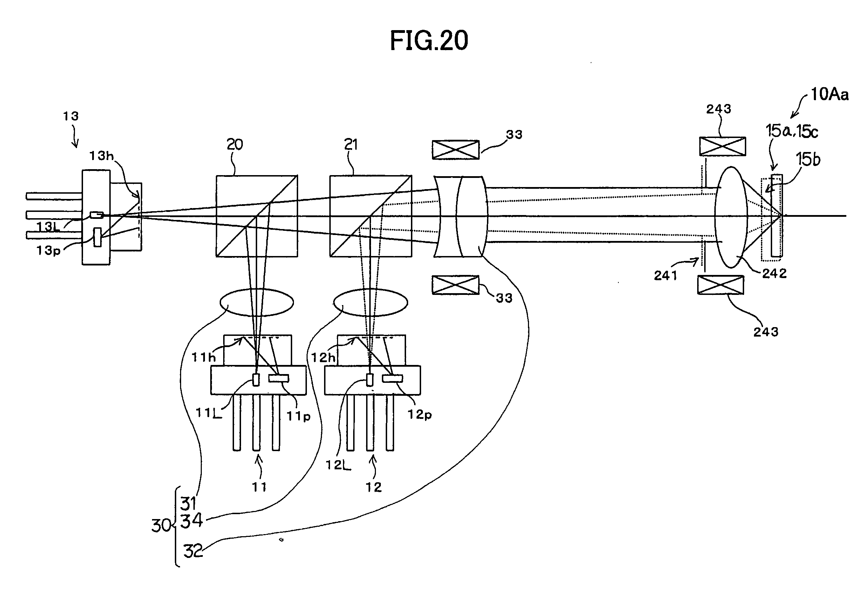

As shown in FIG. 20, in an optical system 10Aa of the optical pickup apparatus having the first hologram unit 11, the second hologram unit 12 and the third hologram unit 13 that have different wavelengths from each other, the diverging light beams from the hologram units 11 and 12 are reflected by the beam splitters (optical path synthesizing and separating means) and transmit the second coupling lens 32 after passing through the first coupling lens 31 and the third coupling lens 34, respectively. In such a case, each of the first coupling lens 31, the third coupling lens 34 and the second coupling lens 32 is a convex lens.

Similarly, the diverging light beam from the third hologram unit 13 transmits the beam splitters 20 and 21 and the second coupling lens 32, and is changed into a parallel light. A dichroic prism utilizing a difference in wavelength between the three hologram units 11, 12 and 13 is used for each of the bam splitters 20 and 21.

For example, when the first hologram unit 11 is for DVD, the second hologram nit 12 is for CD and the third hologram unit is for AOD, the light beam from the coupling lens system 30 is limited in an aperture diameter corresponding to NA0.65 for DVD, NA0.50 for CD and NA0.65 for AOD by the aperture (wavelength aperture limiting element) 41, and is incident on the objective lens 242.

The objective lens 242 is a three-wavelength compatible diffraction lens so as to converge each light beam onto the recording surface of the DVD 15a having a substrate thickness of 0.6 mm, the recording surface of the CD 15b having a substrate thickness of 1.2 mm or the recording surface of AOD 15c having a substrate thickness of 0.6 mm. The light beam incident on the objective lens 242 is a parallel light for DVD and AOD, and is a diverging light for CD. The reflected light from the discs are incident on the respective hologram units 11, 12 and 13, and the light-receiving elements 11h, 12h and 13h generate a track signal, a focus signal, an information signal, etc.

The objective lens 242 converges a light beam to form a beam spot of a diffraction limit on the recording surface of each disc with respect to each wavelength by always following a movement of each disc by being servo-controlled in accordance with the track signal and the focus signal.

Since the optical path for coupling can be shortened by using a convex lens for each of the first coupling lens 31, the second coupling lens 32 and the third coupling lens 34, there is an advantage that the size of the optical pickup apparatus can be reduced.

In addition, the wavelength $\lambda_A$, which is a wavelength of the optical beam passing through the first coupling lens 31 or the coupling lens 34 (both are convex lenses), and a wavelength $\lambda_B$, which is a wavelength of the light beam not transmitting the first coupling lens 31 or the third coupling lens 34, may be set so that a relationship $\lambda_A < \lambda_B$ is satisfied.

In such a case, the light sources 11L and 12L is set to a wavelength longer than the wavelength of the light source 13L, a smaller RIM can be coupled, which increases a coupling efficiency and a disc surface power, thereby achieving high speed recording.

Moreover, at least one group of lenses movable by the lens moving means in the optical axis direction may be located between the light source and the light path synthesizing and separating means, or at least one group of lenses movable by the lens moving means in the optical axis direction may be located between the light path synthesizing and separating means and the objective lens.

Moreover, the optical pickup apparatus shown in FIG. 20 comprises the first hologram unit 11, the second hologram unit 12 and the third hologram unit 13 that correspond to the respective three optical information recording media (DVD 15a, CD 15b and AOD 15c), and further comprises another beam splitter (another optical path synthesizing and separating means) 21 in addition to the beam splitter between the third hologram unit 13 and the second coupling lens 32. In such a case, the third hologram unit 13, the beam splitter 20, the beam splitter 21, the second coupling lens 32, and the objective lens 42 are aligned along a substantially straight line, and a first hologram unit 11 is positioned perpendicular to the optical axis of the beam splitter 20 with the first coupling lens 31 therebetween, and a second hologram unit 12 is positioned perpendicular to the optical axis of the beam splitter 21 with the third coupling lens 34 therebetween.

Comparing FIG. 15 and FIG. 20, the first coupling lens (a group of lenses) 31 of the coupling lens system 30 driven by the actuator 33 in FIG. 15 is located on the side of the light source 11L with respect to the beam splitter (optical path synthesizing and separating means) 20, while the second coupling lens (a group of lenses) 32 of the coupling lens system 30 driven by the actuator 33 in FIG. 20 is located on the side of the objective lens 242 with respect to the beam splitters (optical path synthesizing and separating means) 20 and 21.

In FIG. 15, there is no need to change the coupled state of the second hologram unit 12 for CD due to variation in normal substrate thickness or a wavelength fluctuation, and only the light beam of the first hologram unit 11 for DVD is changed by adjustment by moving the position of the coupling lens system 30. In such a case, the lens closer to the light source 11L than the beam splitter 20, that is, the first coupling lens 31 is moved so as to change only one light beam.

Also in FIG. 20, although there is no need to change the coupling state of the hologram unit 12 for CD, it is necessary to change a coupling state of each of the light beam of the first hologram unit 11 for DVD and the light beam of the third hologram unit 13 for AOD by adjustment by moving the position of the coupling lens 32. In such a case, the driving mechanism can be shared by DVD and AOD by driving the second coupling lens located closer to the objective lens 242 than the beam splitter 21.

In the case of CD, the second coupling lens 32 is returned always to a fixed position.

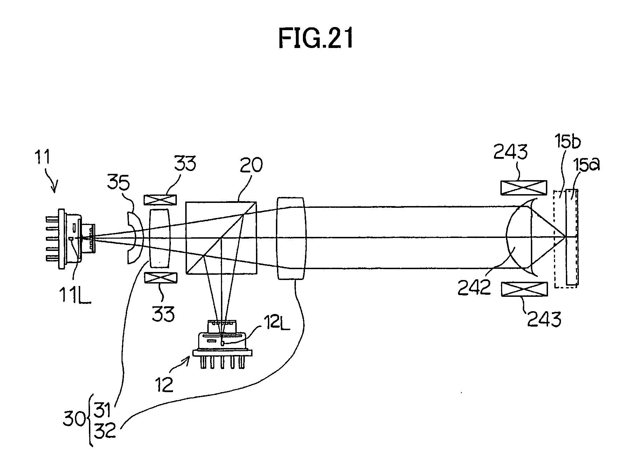

Additionally, in the above-mentioned embodiment, as shown in FIG. 21, beam shaping means 35 may be provided between the light source 11 and the first coupling lens (a group of lenses) 31, which is closest to the light source 11L in the coupling lens system 30.

The bean shaping means 35 corresponds to a diffraction surface or an anamorphic lens having different magnification in directions parallel and perpendicular to an active layer of the semiconductor laser of the light source 13L in a plane perpendicular to the direction "a" of the optical axis. It is desirable in the optical pickup, to set $M \times \theta_{//}/\theta_{\perp} \fallingdotseq 1.0$ where $\theta_{//}$ is a divergence angle in a direction parallel to the active layer and theta $\perp$ is a diverging angle in a direction perpendicular to the active layer. M is referred to as a shaping magnification. The beam shaping means 35 is designed so as to satisfy the following relationship, where $f_{//}$ is a divergence angle in a direction parallel to the active layer and $f_{\perp}$ is a diverging angle in a direction perpendicular to the active layer.

$$M = f_{//}/f_{\perp}$$

An anamorphic lens (beam shaping means 35) having different magnifications in the directions parallel to and perpendicular to the active layer of the semiconductor laser of the light source 11L. When a light beam passes through the beam shaping means 35, which is a lens having different magnifications in the two directions parallel to and perpendicular to the active layer, the diverging angle of the light beam is changed, which shapes the light beam. That is, the anamorphic lens as the beam shaping means 35 is capable of converting an elliptic converging light into a circular converging light, and, a light using efficiency (coupling efficiency) in the optical pickup can be increased. An anamorphic, aspheric equation is shown below.

$$Z = \frac{CUXx^2 + CUYy^2}{1 + SQRT\{1 - (1+KX)CUXx^2 - (1+KY)CUYy^2\}}$$
$$+ AR\{(1-AP)x^2 + (1+AP)y^2\}^2 + BR\{(1-BP)x^2 + (1+BP)y^2\}^3$$
$$+ CR\{(1-CP)x^2 + (1+CP)y^2\}^4 + DR\{(1-DP)x^2 + (1+DP)y^2\}^5$$

Moreover, optical disc discriminating means (not shown in the figures) may be provided in the optical pickup apparatus for discriminating a kind of each of a plurality of optical information recording media (DVD 15a, CD 15b, AOD 15c) such as shown in FIG. 20 so as to move at least one group of lenses from among the first coupling lens 31, the second coupling lens 32 and the third coupling lens 34 that constitute the coupling lens system 30 by the actuator (lens moving means) 33 in the direction "a" of the optical axis in accordance with kinds of the optical information recording media.

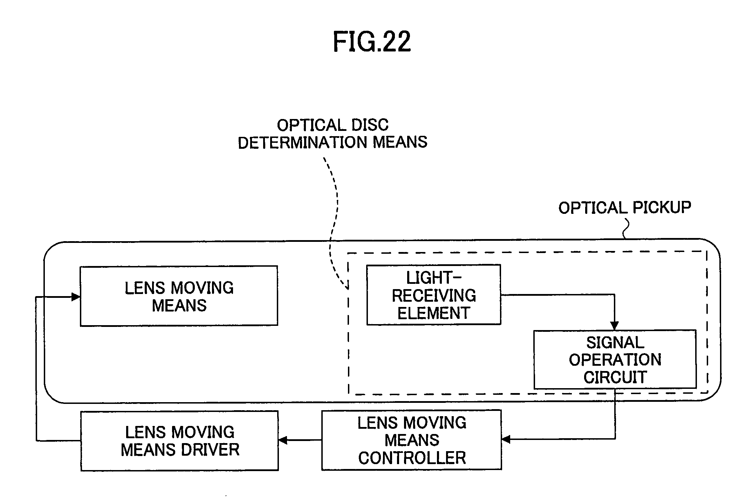

In this structure, the optical disc discriminating means for discriminating a kind of an optical disc attached is provided in the optical pickup apparatus. As shown in FIG. 22, the optical disc discriminating means comprises a light-receiving element and a signal operation circuit that perform a discrimination based on a signal output by a signal detecting system of the optical pickup apparatus. The signal output from the optical disc discriminating means is input to a controller of the lens moving means such as the actuator 33, and the lens moving means is controlled by a lens driving means driver.

Optical discs are different in their substrate thickness and refraction index depending on kinds of the optical discs. For this reason, a spherical aberration may be generated for each optical disc.

In this structure a wavefront aberration of the optical system can be reduced by changing the position of the coupling lens system 30 in accordance with information obtained from the optical disc discriminating means.

Additionally, the coupling lens system 30 or the objective lens 242 may be located at a position in the direction "a" of the optical axis so that an aspheric aberration generated in each optical surface is minimized.

A general semiconductor laser has variation in oscillation wavelength de to the manufacture variation of an active layer structure. In this structure, as shown in FIG. 15, the position of each lens in the direction "a" of the optical axis is fixed in accordance with the oscillation wavelength of the light source 11A so that a spherical aberration generated in each optical surface is minimized. When a spherical aberration of the optical system changes, each lens is moved in the direction "a" of the optical axis with respect to the fixed position of the lens as a center.

Moreover, as shown in FIG. 20, if there are three light sources and the light source 11L is selected, the position of the coupling lens 32 in the direction "a" of the optical axis is fixed in accordance with the oscillation wavelength of the light source 11L so that a spherical aberration generated in each optical surface is minimized. When the spherical aberration of the optical system of the light source 11L changes, the coupling lens 32 is moved in the direction "a" of the optical axis with respect to the fixed position of the lens as a center. If the light source 12L is selected, the position of the coupling lens 32 in the direction "a" of the optical axis is fixed in accordance with the oscillation wavelength of the light source 12L so that a spherical aberration generated in each optical surface is minimized. When the spherical aberration of the optical system of the light source 12L changes, the coupling lens 32 is moved in the direction "a''" of the optical axis with respect to the fixed position of the lens as a center.

If the oscillation wavelength shifts, a refraction index changes due to a dispersion characteristic of a material used for the lens, thereby generating a spherical aberration. The spherical aberration can be changed into an optimum wavefront aberration by shifting the position of the lens in the optical axis direction. Furthermore, when a spherical aberration is generated in an optical surface of the optical pickup, the spherical aberration can be changed into an optimum wavefront aberration by further moving the from the shifted position. Moreover, for example, if the light source 11L is selected, the position of the coupling lens 32 in the direction "a" of the optical axis is fixed in accordance with the oscillation wavelength of the light source 11L so that a spherical aberration generated in each optical surface is minimized. Thereby, the spherical aberration generated due to variation in the oscillation wavelength of the light source 11L can be reduced. If the light source 12L is selected, the position of the coupling lens 32 in the direction "a" of the optical axis is fixed in accordance with the oscillation wavelength of the light source 12L so that a spherical aberration generated in each optical surface is minimized. Thereby, the spherical aberration generated due to variation in the oscillation wavelength of the light source 12L can be reduced.

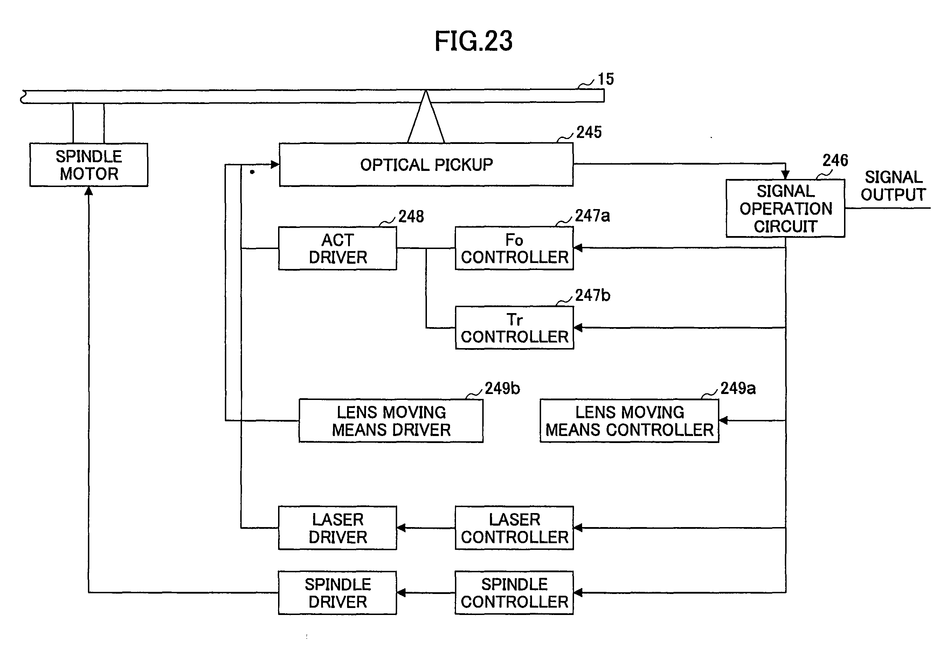

As shown in FIG. 23, the optical pickup apparatus according to the above-mentioned embodiment may be mounted on an optical disc drive apparatus. A semiconductor laser serving as a light source of an optical pickup 245 is driven and controlled by a laser driver/laser controller of the optical disc drive apparatus.

A signal output from the light-receiving element of the optical pickup 245 is sent to each controller through a signal operation circuit 246. Fo signal and Tr signal for enacting an objective lens are converted into control signals of the objective lens by an Fo controller 247a and a Tr controller 247b. Further, through an ACT driver 248, the output signal from the signal operation circuit is converted into control signal by a lens moving means driver 249a so that lens moving means is driven by the lens moving means driver 49b. The lens moving means controller 49a and the lens moving means driver 49b are mounted in the optical disk drive apparatus.

Thus, it becomes possible to reduce a spherical aberration generated due to various causes.

As apparent from the above description, there is provided according to the present embodiment an optical pickup apparatus, which can couple light beams from a plurality of light sources with a simple structure, and is capable of correcting a chromatic aberration and a spherical aberration generated due to fluctuation in wavelength, a multi-layer disc structure, and a variation in thickness of a disc substrate.

The present invention is not limited to the specifically disclosed embodiments, and variations and modifications may be made without departing from the scope of the present invention.

**Claims**

1. An optical pickup apparatus for recording/reproducing information on/from an optical information recording medium by converging a light beam from a light source onto a recording surface of the optical information recording medium, **characterized by**:

   a plurality of light sources corresponding to a plurality of optical information recording media, respectively;
   a coupling lens including a plurality of groups of lenses common to the plurality of light sources so as to converge a light beam from each of the light sources;
   an aperture capable of changing an aperture diameter for the light beam, which has been converged by the coupling lens, in accordance with one of the light sources from which the light beam is emitted;
   an objective lens converging the light beam, which has passed through the aperture, onto a recording surface of one of the optical information recording media corresponding to said one of the light sources that emits the light beam; and
   a lens moving mechanism moving at least one group of lenses from among the plurality of groups of lenses of the coupling lens in a direction of an optical axis thereof so that a ratio of an intensity of the light beam in a peripheral part of the aperture of the light beam to an intensity of the light beam at the center of the optical axis is set to a predetermined value for each light source.

2. The optical pickup apparatus as claimed in claim 1, wherein said objective lens is common to said plurality of light sources.

3. The optical pickup apparatus as claimed in claim 1 or 2, wherein at least two of said plurality of light sources are located with an light-emitting pint interval therebetween being equal to or smaller than several hundreds micrometers, and at least two groups of lenses of said coupling lens are provided with the lens moving mechanisms that moves the at least two groups of lenses, respectively, in the direction of the optical axis in accordance with the aperture diameter corresponding to each of said at least two of said plurality of light sources.

4. The optical pickup apparatus as claimed in claim 1, wherein at least two of said plurality of light sources have different wavelengths, and after said lens moving mechanism moves at least one group of lenses from among said plurality of groups of lenses in the direction of the optical axis in accordance with the aperture diameter of said aperture, said lens moving mechanism further moves said at least one group of lenses from among said plurality of groups of lenses in the direction of the optical axis in accordance with the wavelengths of said at least two of said plurality of light sources.

5. The optical pickup apparatus as claimed in claim 1, wherein at least one of said plurality of optical information recording media has a plurality of recording surfaces in a layered structure, and after said lens moving mechanism moves at least one group of lenses from among said plurality of groups of lenses in the direction of the optical axis in accordance with the aperture diameter of said aperture, said lens moving mechanism moves said at least one group of lenses from among said plurality of groups of lenses in the direction of the optical axis in accordance with said plurality of recording surfaces.

6. The optical pickup apparatus as claimed in claim 1, wherein at least one of said plurality of optical information recording media has a light-transmitting layer, and after said lens moving mechanism moves at least one group of lenses from among said plurality of groups of lenses in the direction of the optical axis in accordance with the aperture diameter of said aperture, said lens moving mechanism further moves said at least one group of lenses from among said plurality of groups of lenses in the direction of the optical axis in accordance with a variation in thickness of said light-transmitting layer.

7. The optical pickup apparatus as claimed in claim 1, wherein after said lens moving mechanism moves at least one group of lenses from among said plurality of groups of lenses in the direction of the optical axis in accordance with the aperture diameter of said aperture, said lens moving mechanism further moves said at least one group of lenses from among said plurality of groups of lenses in the direction of the optical axis in accordance with a fluctuation in wavelength of one of said plurality of light sources that emits the light beam.

8. The optical pickup apparatus as claimed in claim 1, further comprising spherical aberration detecting means for detecting a spherical aberration with respect to at least one of said plurality of light sources.

9. The optical pickup apparatus as claimed in claim 1, wherein said coupling lens is an achromatic lens that corrects a chromatic aberration in a beam spot formed on said recording surface by converging the light beam emitted from at least one of said light sources.

10. The optical pickup apparatus as claimed in claim 1, further comprising a lens located between one of said light sources and said coupling lens so as to change a degree of divergence of the light beam from said one of said light sources.

11. An optical disc drive apparatus having a drive mechanism for driving an optical information recording medium, **characterized in that**:

    the optical pickup apparatus as claimed in any one of claims 1 to 10 performing recording and reproducing operations on the optical information recording medium driven by the drive mechanism.

12. An optical pickup apparatus for recording/reproducing information on/from an optical information recording medium by converging a light beam from a light source onto a recording surface of the optical information recording medium, the optical pickup apparatus comprising:

    a plurality of light sources corresponding to a plurality of optical information recording media, respectively;
    an optical path synthesizing and separating component that synthesizes and separates light beams from the plurality of light sources;
    a coupling lens including a plurality of groups of lenses common to the plurality of light sources so as to converge a light beam from each of the light sources; and
    an objective lens converging the light beam, which has passed through the aperture, onto a recording surface of one of the optical information recording media corresponding to said one of the light sources that emits the light beam,

    wherein said plurality of groups of lenses constituting said coupling lens is located in a direction of an optical axis of at least one of the light sources with said optical path synthesizing and separating component interposed therebetween; and a lens moving mechanism moves at least one group of lenses from among the plurality of groups of lenses of the coupling lens in a direction of an optical axis thereof in accordance with an aperture diameter of said aperture.

13. The optical pickup apparatus as claimed in claim 12, wherein said lens moving mechanism is provided to the lens having a maximum absolute value of a focal distance from among said plurality of groups of lenses.

14. The optical pickup apparatus as claimed in claim 12, wherein one of said optical information recording media has a plurality of recording surfaces in a layered structure, and said lens moving mechanism moves at least one group of lenses of said coupling lens in the direction of the optical axis so as to converge each light beam onto a respective one of the recording surfaces.

15. The optical pickup apparatus as claimed in claim 12, wherein one of said optical information recording media has a light-transmitting layer, and said lens moving mechanism moves at least one group of lenses of said coupling lens in the direction of the optical axis in accordance with a variation in thickness of the light-transmitting layer.

16. The optical pickup apparatus as claimed in claim 12, said lens moving mechanism moves at least one group of lenses of said coupling lens in the direction of the optical axis in accordance with a wavelength fluctuation of each of the light sources.

17. The optical pickup apparatus as claimed in claim 12, wherein each of said coupling lens and said objective lens is an achromatic lens system.

18. The optical pickup apparatus as claimed in claim 12, wherein an entire system including said coupling lens and said objective lens is an achromatic lens system.

19. The optical pickup apparatus as claimed in claim 12, further comprising an aspheric aberration detecting means for detecting an aspheric aberration in a reflected light from one of the recording surfaces of one of said optical information recording media onto which a light beam from at least one of said light sources is converged.

**20.** The optical pickup apparatus as claimed in claim 12, wherein one group of lenses located closest to said light sources serve as a concave lens.

**21.** The optical pickup apparatus as claimed in claim 20, wherein $\lambda_A < \lambda_B$ is satisfied where $\lambda_A$ is a wavelength of a light beam that transmits said concave lens, and $\lambda_B$ is a wavelength of a light beam that does not transmit said concave lens.

**22.** The optical pickup apparatus as claimed in claim 12, wherein one group of lenses located closest to said light sources serve as a convex lens.

**23.** The optical pickup apparatus as claimed in claim 22, wherein $\lambda_B < \lambda_A$ is satisfied where $\lambda_A$ is a wavelength of a light beam that transmits said convex lens, and $\lambda_B$ is a wavelength of a light beam that does not transmit said convex lens.

**24.** The optical pickup apparatus as claimed in claim 12, wherein said at least one group of lenses moved by said lens moving mechanism in the direction of the optical axis are located between said light sources and said optical path synthesizing and separating component.

**25.** The optical pickup apparatus as claimed in claim 12, wherein said at least one group of lenses moved by said lens moving mechanism in the direction of the optical axis are located between said optical path synthesizing and separating component and said objective lens.

**26.** The optical pickup apparatus as claimed in claim 12, further comprising beam shaping means provided between said light sources and one group of lenses arranged closest to said light sources.

**27.** The optical pickup apparatus as claimed in claim 12, further comprising discriminating means for discriminating a kind of each of said optical information recording media, and said lens moving mechanism moves at least one group of lenses that constitute said coupling lens in the direction of the optical axis in accordance with the king of each of said optical information recording media.

**28.** The optical pickup apparatus as claimed in claim 12, the direction of the optical axis of said coupling lens or said objective lens is set so that a spherical aberration generated in each optical surface is minimized in accordance with an oscillation wavelength of each of said light sources.

**29.** An optical disc drive apparatus having a drive mechanism for driving an optical information recording medium, **characterized in that**:

the optical pickup apparatus as claimed in any one of claims 12 to 28 performing recording and reproducing operations on the optical information recording medium driven by the drive mechanism.

FIG.1 PRIOR ART

# FIG.2 PRIOR ART

# FIG.3 PRIOR ART

# FIG.4 PRIOR ART

FIG.5A

FIG.5B

## FIG.6A

LASER LIGHT

AOD

CL

fa(22.4mm)

$\theta$ aod

f a = 22.4mm

OL

NA0.65

## FIG.6B

LASER LIGHT

DVD

fb(17.0mm)

$\theta$ dvd

f b = 17.0mm

OL

NA0.65

FIG.7A

FIG.7B

FIG.8A

FIG.8B

FIG.9A

FIG.9B

EP 1 575 040 A2

FIG.10

# FIG.11

EP 1 575 040 A2

# FIG.12

EP 1 575 040 A2

FIG.13

# FIG.14

# FIG.15

EP 1 575 040 A2

# FIG.16A

CL
fdvd
←30

φdvd  OL  242
15a
NA0.65

DVD

θdvd

fdvd

241

# FIG.16B

CL
fcd
←30

φcd  OL  242
15b
NA0.5

CD

θcd

fcd

241

EP 1 575 040 A2

# FIG.17

# FIG.18

# FIG.19

EP 1 575 040 A2

# FIG.20

EP 1 575 040 A2

# FIG.21

# FIG.22

OPTICAL DISC
DETERMINATION MEANS

OPTICAL PICKUP

LENS MOVING
MEANS

LIGHT−
RECEIVING
ELEMENT

SIGNAL
OPERATION
CIRCUIT

LENS MOVING
MEANS DRIVER

LENS MOVING
MEANS
CONTROLLER

EP 1 575 040 A2

# FIG.23